# EUROPEAN PATENT APPLICATION

(11) **EP 4 737 612 A1**
(43) Date of publication of application: **06.05.2026**
(21) Application number: 24832129.1
(22) Date of filing: 28.06.2024
(51) Int. Cl.: C23C 26/00, B32B 9/00, B32B 9/04, C01B 32/914, C04B 41/87

(54) **COATING STRUCTURE MANUFACTURING METHOD, AND COATING STRUCTURE**

(30) Priority: 29.06.2023 JP 2023107244; 01.09.2023 JP 2023141902
(71) Applicant: Mitsui Kinzoku Company, Limited, Tokyo 141-8584 (JP); Kunitomo Nekkou Co. Ltd., Higashiosaka-shi, Osaka 578-0948 (JP)
(72) Inventor: HARA, Syuhei, Omuta-shi, Fukuoka 836-0003 (JP); KONDO, Akihiro, Ageo-shi, Saitama 362-0021 (JP); NIKATA, Soichiro, Omuta-shi, Fukuoka 836-0003 (JP); TSUBOTA, Terukazu, Osaka-shi, Osaka 578-0948 (JP); UEJIMA, Yasutsugu, Osaka-shi, Osaka 578-0948 (JP)
(74) Representative: Parker, Andrew James
(86) International application number: PCT/JP2024/023617
(87) International publication number: WO 2025/005272

(57) **Abstract**

A method for producing a coating structure of the present invention is a method for producing a coating structure having a metal composite coating on a substrate, the method including a step of applying or immersing a metal compound-containing substance on the substrate, and a reaction step of forming a metal composite coating by performing at least one reaction of a carbonization reaction, a carbonitriding reaction, or a nitriding reaction by heating the substrate in a state where a carbon source and/or a nitrogen source is supplied under reduced pressure or vacuum. In the coating structure of the present invention, the metal-carbon composite coating has a D band/G band peak area ratio in Raman spectroscopy of 0.5 or more and 2.0 or less.

## Description

### Technical Field

The present invention relates to a method for producing a coating structure, and a coating structure.

### Background Art

In metalworking, a carburizing method, a carbonitriding method, and a nitriding method are performed for the purpose of hardening a surface layer.

For example, Patent Literature 1 discloses a method for hardening a surface of a steel workpiece by bringing a hardening gas in which carbon or nitrogen and hydrogen are bonded into contact with the steel workpiece in a treatment furnace under a vacuum atmosphere.

### Citation List

### Patent Literature

Patent Literature 1: JP 6058846 B1

### Summary of Invention

### Technical Problem

However, in the method disclosed in Patent Literature 1, properties such as physical and/or chemical stability of a steel workpiece, that is, a surface layer formed by carburizing, carbonitriding and nitriding a surface of a substrate, have depended on the type and material of the substrate.

In view of the above problems, an object of the present invention is to provide a method for producing a coating structure, which can form a physically and chemically stable surface layer independent of a substrate and can produce a coating structure having a uniform metal composite coating on the substrate, and a coating structure.

### Solution to Problem

A method for producing a coating structure of the present invention made to solve the above problems is a method for producing a coating structure having a metal composite coating on a substrate, the method including a step of applying or immersing a metal compound-containing substance on the substrate, and a reaction step of forming a metal composite coating by performing at least one reaction of a carbonization reaction, a carbonitriding reaction, or a nitriding reaction by heating the substrate in a state where a carbon source and/or a nitrogen source is supplied under reduced pressure or vacuum.

The method for producing a coating structure of the present invention can produce a coating structure having a uniform metal composite coating on a substrate, which can form a physically and chemically stable surface layer independent of the substrate.

In the present description, the "metal composite coating" may be present in a state in which a metal element is bonded to another metal element, a metalloid element, or a non-metal element in the coating. In addition, the metal element may be present in a mixed or dispersed state, not in a state in which a metal element is bonded to another metal element, a metalloid element, or a non-metal element in the coating. Examples of the metal compound include metal carbides, metal nitrides, metal carbonitrides, metal oxides, metal sulfides, and metal hydroxides, and metal carbides, metal nitrides, and metal carbonitrides are preferable, and a plurality of compounds may be present.

Here, the coating structure to be produced by the method for producing a coating structure of the present invention includes a coating structure having a metal-composite coating on a substrate, and for example, a coating structure having a metal-composite coating on at least one surface (for example, the surface) of the substrate, a coating structure having a metal-composite coating on the entire peripheral surface of the substrate, and a coating structure having a metal-composite coating on a part of one surface of the substrate.

First, in the step of applying or immersing the metal compound-containing substance on the substrate according to the method for producing a coating structure of the present invention, the metal compound-containing substance is applied or immersed on the substrate.

The substrate used in the method for producing a coating structure of the present invention contains at least one selected from the group consisting of carbon, a metal carbide, a pure metal, an alloy, a metal oxide, and a composite metal oxide.

The substrate used in the method for producing a coating structure of the present invention may be a substrate containing at least one selected from the group consisting of carbon, a metal carbide, a pure metal, an alloy, a metal oxide, and a composite metal oxide described later.

The substrate containing carbon may be a substrate composed only of carbon, a substrate containing carbon as a main component and having a carbon content of 50 mass% or more, or a substrate having a multilayer structure and having an outermost layer composed only of carbon or containing carbon as a main component and having a carbon content of 50 mass% or more. The substrate containing carbon is particularly preferably a substrate composed only of carbon.

Also, the size and shape of the substrate containing carbon are not particularly limited as long as the carbon substrate can be heated in a stationary furnace used in a step to be described later. Specific examples of the carbon substrate include a crucible, a furnace material, an electrode, a fiber, a filtration device, a filter, a protective tube, a heater tube, a burner nozzle, and a refractory jig.

Examples of the carbon material of the substrate containing carbon include fullerene, carbon nanotube, carbon nanofiber, graphene, graphene oxide, carbon nanohorn, diamond, hyperdiamond, and carbon fiber.

In addition, the carbon material may be composed only of carbon or other materials containing carbon. Further, the structure of the carbon material may have a uniform tissue structure or a non-uniform tissue structure. The uniform tissue structure may be hollow or porous. Also, the non-uniform tissue structure may be, for example, a sea-island form, multilayer, hollow, or porous.

Furthermore, the shape of the carbon material may be a powder shape, a plate shape, a film shape, a fiber shape, or the like, and may be a molded body thereof, that is, a mixture, a multilayer body, a green compact, a sintered body, a fiber bundle body, a nonwoven body, or a woven fabric body (plain weave, twill weave, satin weave, and basket weave).

The carbon material is particularly preferably a fibrous material, and specific examples thereof include metal fibers (steel fibers and the like), ceramic fibers (metal oxide fibers, metal carbide fibers, metal nitride fibers, silicon carbide fibers, glass fibers, and the like), and polymer fibers (natural polymer fibers, polysaccharide fibers, cellulose fibers, artificial polymer fibers, resin fibers, carbon fibers, and the like).

The substrate containing metal carbide may be a substrate composed only of metal carbide, a substrate containing metal carbide as a main component and having a metal carbide content of 50 mass% or more, or a substrate having a multilayer structure and having an outermost layer composed only of metal carbide or containing metal carbide as a main component and having a metal carbide content of 50 mass% or more. The substrate containing metal carbide is particularly preferably a substrate composed only of metal carbide. Examples of the metal carbide contained in the substrate include metal carbides such as tungsten carbide, molybdenum carbide, and tantalum carbide.

The substrate containing pure metal may be a substrate composed only of pure metal, a substrate containing pure metal as a main component and having a pure metal content of 50 mass% or more, or a substrate having a multilayer structure and having an outermost layer composed only of pure metal or containing pure metal as a main component and having a pure metal content of 50 mass% or more. The substrate containing pure metal is particularly preferably a substrate composed only of pure metal. Examples of the pure metal contained in the substrate include pure metals such as Ti, V, Fe, Y, Zr, Cr, Ni, Mn, Co, Cu, Zn, and Pb.

The substrate containing alloy may be a substrate composed only of alloy, a substrate containing alloy as a main component and having an alloy content of 50 mass% or more, or a substrate having a multilayer structure and having an outermost layer composed only of alloy or containing alloy as a main component and having an alloy content of 50 mass% or more. The substrate containing alloy is particularly preferably a substrate composed only of alloy. Examples of the alloy contained in the substrate include an alloy containing at least one metal element selected from stainless steel (SUS), steel, brass, duralumin, a titanium alloy, a nickel alloy, an aluminum alloy, a copper alloy, a zinc alloy, and the like.

Specific examples of the material of the substrate include SUS304 (JIS G4305 (2021)), SUS310S (JIS G4305 (2005)), SUS316 (JIS G4305 (2015)), SUS316L (JIS G4305 (2015) SUS316L), Ti (JIS H 4600 TP340C), and Inconel (SB-168UNSN06600 (2019ED)).

The substrate containing metal oxide may be a substrate composed only of metal oxide, a substrate containing metal oxide as a main component and having a metal oxide content of 50 mass% or more, or a substrate having a multilayer structure and having an outermost layer composed only of metal oxide or containing metal oxide as a main component and having a metal oxide content of 50 mass% or more. The substrate containing metal oxide is particularly preferably a substrate composed only of metal oxide. Examples of the metal oxide contained in the substrate include metal oxides such as titanium oxide, alumina, zirconia, magnesia, vanadia, nickel oxide, and silica.

The substrate containing composite metal oxide may be a substrate composed only of composite metal oxide, a substrate containing composite metal oxide as a main component and having a composite metal oxide content of 50 mass% or more, or a substrate having a multilayer structure and having an outermost layer composed only of composite metal oxide or containing composite metal oxide as a main component and having a composite metal oxide content of 50 mass% or more. The substrate containing composite metal oxide is particularly preferably a substrate composed only of composite metal oxide. Examples of the composite metal oxide contained in the substrate include composite metal oxides containing at least one metal element selected from mullite, silica-alumina mixtures, alumina-zirconia mixtures, and the like.

Also, the size and shape of the substrate are not particularly limited as long as the substrate has a size and shape capable of performing at least one reaction of a carbonization reaction, a carbonitriding reaction, or a nitriding reaction described later, and the substrate may have a plate shape, a tubular shape, or a cubic shape. Specific examples of the substrate include a crucible, a furnace material, an electrode, a fiber, a filtration device, a filter, a protective tube, a heater tube, a burner nozzle, and a refractory jig.

In addition, the metal compound-containing substance used in the method for producing a coating structure of the present invention preferably contains a compound of at least one metal element selected from Ti, Nb, Mo, Hf, Ta, W, Zr, and Si.

Examples of the metal compound-containing substance include those containing a compound of at least one metal element selected from Ti, Nb, Mo, Hf, Ta, W, Zr, and Si. Specific examples thereof include a peroxo complex metal compound containing at least one metal element selected from Ti, Nb, Mo, Hf, Ta, W, Zr, and Si (for example, a peroxohydroxy acid complex metal compound, a peroxocitrate complex metal compound, or a peroxoammonium complex metal compound), a metal hydroxide, a hydroxy acid complex metal compound (for example, an ammonium oxalate complex metal compound), and a polyacid, but are not limited to these compounds. Moreover, the metal compound-containing substance may contain a metal element other than at least one metal element selected from Ti, Nb, Mo, Hf, Ta, W, Zr, and Si, a metalloid element, and a nonmetal element. Examples thereof include B and P.

When the metal compound-containing substance is a peroxo complex metal compound, even if a substrate does not contain carbon, by heating a substrate coated with the peroxo complex metal compound, the metal element contained in the peroxo complex metal compound reacts with carbon to form a metal carbide. Also, when the metal compound-containing substance is a hydroxy acid complex metal compound, the metal element contained in the hydroxy acid complex metal compound reacts with carbon in the same manner to form a metal carbide.

The content of the metal compound-containing substance is preferably adjusted according to the type of the metal element or the carbon-based substrate, more preferably more than 0 mass% and 40 mass% or less, still more preferably 0.1 mass% or more and 30 mass% or less, particularly preferably 0.2 mass% or more and 30 mass% or less, and more particularly preferably 0.3 mass% or more and 15 mass% or less. When the metal compound-containing substance contains a plurality of metal elements selected from Ti, Nb, Mo, Hf, Ta, W, Zr, and Si, the total value of the mass fractions is preferably within the above-described numerical range.

Here, the content of the metal compound-containing substance may be calculated by appropriately diluting the metal compound-containing substance with dilute hydrochloric acid as necessary, and measuring the mass fraction in terms of metal in accordance with JIS K0116:2014 using ICP emission spectrometry (manufactured by Agilent Technologies, Inc.: AG-5110).

The content of the metal compound-containing substance is preferably adjusted according to the type of the metal element or the carbon-based substrate, more preferably more than 0 mass% and 35 mass% or less, still more preferably 0.03 mass% or more and 25 mass% or less, particularly preferably 0.06 mass% or more and 25 mass% or less, and more particularly preferably 0.1 mass% or more and 15 mass% or less in terms of metal. When the metal compound-containing substance contains a plurality of metal elements selected from Ti, Nb, Mo, Hf, Ta, W, Zr, and Si, the total value of the mass fractions in terms of metals is preferably within the above-described numerical range. In the present description, the phrase "in terms of metal" means in terms of Ti for Ti, in terms of Nb for Nb, in terms of Mo for Mo, in terms of Hf for Hf, in terms of Ta for Ta, in terms of W for W, in terms of Zr for Zr, and in terms of Si for Si.

Further, the metal compound-containing substance used in the method for producing a coating structure of the present invention more preferably contains a compound of at least one metal element selected from Nb, Hf, and Ta.

Examples of the metal compound-containing substance include those containing a compound of at least one metal element selected from Nb, Hf, and Ta. Specific examples thereof include a peroxo complex metal compound containing at least one metal element selected from Nb, Hf, and Ta (for example, a peroxohydroxy acid complex metal compound, a peroxocitrate complex metal compound, or a peroxoammonium complex metal compound), a metal hydroxide, a hydroxy acid complex metal compound (for example, an ammonium oxalate complex metal compound), and a polyacid, but are not limited to these compounds.

In addition, the metal compound-containing substance used in the method for producing a coating structure of the present invention may contain a resin.

When the metal compound-containing substance contains a resin, it is preferable in that the resin is uniformly compatible with the metal compound and functions to adhere to the substrate, thereby improving film formability and adhesion to the substrate.

Examples of the resin contained in the metal compound-containing substance include polyolefin-based compounds and polyvinyl-based compounds.

Moreover, the metal compound-containing substance used in the method for producing a coating structure of the present invention may contain a carbon material.

When the metal compound-containing substance contains a carbon material, it is preferable in that the carbon material becomes a carbon component during carbonization and carbonization is improved.

Furthermore, the metal compound-containing substance used in the method for producing a coating structure of the present invention may be a solution, a sol, or a gel. The metal compound-containing substance may be any substance as long as it contains a metal compound, and more specifically, it is liquefied by applying a shear stress. That is, the metal compound-containing substance includes a liquid, sol, gel, or semi-solid substance in a normal state and may be any substance as long as it can be applied onto the substrate. Also, when the metal compound-containing substance used in the method for producing a coating structure of the present invention is a solution, it can be easily applied onto the substrate, which is more preferable. Furthermore, the gel may have a viscosity of 200 mPa · s or more by a rotating cylinder method at 25°C.

Also, the metal compound-containing substance used in the method for producing a coating structure of the present invention has a maximum value of light transmittance in a wavelength region of 500 nm to 700 nm of 70%T or more and a particle size (D50) of particles in the metal compound-containing substance in dynamic light scattering of 3,000 nm or less.

When the metal compound-containing substance used in the method for producing a coating structure of the present invention has a maximum value of light transmittance in a wavelength region of 500 nm to 700 nm of 70%T or more and a particle size (D50) of particles in the metal compound-containing substance in dynamic light scattering of 3,000 nm or less, it is preferable from the viewpoint of high dispersibility, excellent uniformity of components in a liquid, and temporal stability.

When the metal compound-containing substance used in the method for producing a coating structure of the present invention has a maximum value of light transmittance in the wavelength region of 500 nm to 700 nm of 70%T or more, it is preferable in that the dispersibility is high and the uniformity of components in a liquid is excellent. The maximum value of the light transmittance in the wavelength region of 500 nm to 700 nm is more preferably 72%T or more, still more preferably 74%T or more, particularly preferably 76%T or more, more particularly preferably 78%T or more, and even more particularly preferably 80%T or more. The light transmittance in the wavelength region of 500 nm to 700 nm may be 80%T. The measured value of the light transmittance may exceed 100%T due to a measurement error or the like. However, since the theoretical upper limit value is 100%T, the light transmittance is regarded as 100%T when the measured value exceeds 100%T.

Here, the light transmittance in the wavelength region of 500 nm to 700 nm is measured for the metal compound-containing substance used in the method for producing a coating structure of the present invention using a spectrophotometer according to the following light transmittance measurement conditions.

### = Light transmittance measurement conditions =

- Measuring device: Ultraviolet-visible near-infrared spectrophotometer Model UH4150 (manufactured by Hitachi High-Tech Science Corporation)
- Measurement mode: Wavelength scan
- Data mode: %T (transmission)
- Measurement wavelength range: 200 nm to 2,000 nm
- Scanning speed: 600 nm/min
- Sampling interval: 2 nm

On the other hand, when the metal compound-containing substance used in the method for producing a coating structure of the present invention contains a compound of Si, the light transmittance in the wavelength region of 500 nm to 700 nm is determined by placing 3 g of a metal compound-containing substance containing a compound of Si adjusted to room temperature (25°C) in a measurement cell (optical path length: 1 cm), and measuring an ultraviolet-visible absorption spectrum (UV-Vis absorption spectrum) in accordance with JIS K 0115, 2004 "General rules for molecular absorptiometric analysis method" according to the following light transmittance measurement conditions (containing Si).

### = Light transmittance measurement conditions (containing Si) =

- Measuring device: Model U-2900 spectrophotometer (manufactured by Hitachi High-Tech Corporation)
- Measurement mode: Wavelength scan
- Data mode: %T (transmission)
- Measurement wavelength range: 200 nm to 1,000 nm
- Scanning speed: 200 nm/min
- Sampling interval: 1 nm
- Cell length: 10 mm
- Measurement cell: Disposable square cell for particle diameter (manufactured by Otsuka Electronics Co.,Ltd.)

Further, the particle size (D50) of the particles in the metal compound-containing substance used in the method for producing a coating structure of the present invention is preferably 3,000 nm or less from the viewpoint of temporal stability, and is more preferably 2,000 nm or less, and may be 1,000 nm or less, 500 nm or less, 400 nm or less, or 300 nm or less. On the other hand, the particle size (D50) is preferably 0.1 nm or more, more preferably 0.5 nm or more, still more preferably 0.7 nm or more, and particularly preferably 1 nm or more. Typically, the particle size (D50) is 0.6 nm or more and 200 nm or less.

Here, the dynamic light scattering is a method in which light scattering intensity from a group of particles moving in a Brownian motion is measured by irradiating a solution such as a suspension solution with light such as laser light, and a particle size and a distribution are obtained from a temporal variation of the intensity. Specifically, the method for evaluating the particle size distribution is performed in accordance with JIS Z 8828:2019 "Particle size analysis-dynamic light scattering" using a zeta potential/particle size/molecular weight analyzer (manufactured by Otsuka Electronics Co., Ltd.: ELSZ-2000ZS). In addition, if necessary, 1000 times diluted with pure water is used as a measurement sample, and in order to remove dust and the like in the measurement sample immediately before measurement, the measurement sample is filtered with a filter having a pore size of 11 µm, and subjected to ultrasonic treatment for 3 minutes with an ultrasonic cleaner (manufactured by AS ONE Corporation: VS-100III). Further, the liquid temperature of the measurement sample was adjusted to 25°C. The particle size (D50) refers to a median diameter (D50) that is a particle size indicating a 50% cumulative value of a cumulative distribution curve.

In addition, the pH of the metal compound-containing substance used in the method for producing a coating structure of the present invention is more than 7, and examples of the solvent include water, alcohols, ketones, and esters, and two or more solvents may be mixed, and it is preferable that the metal compound-containing substance contains water as a solvent.

When the pH of the metal compound-containing substance is more than 7, it is preferable in that the solubility is good. Also, the pH of the metal compound-containing substance is more preferably 7.5 or more, and still more preferably 8.0 or more. The pH of the metal compound-containing substance may be 8.5 or more, 9.0 or more, 9.5 or more, 10.0 or more, 10.5 or more, or 11.0 or more. On the other hand, the pH of the metal compound-containing substance is preferably 13.5 or less, more preferably 13.0 or less, and still more preferably 12.5 or less. Furthermore, when the metal compound-containing substance contains water as a solvent, it is preferable from the viewpoint of reducing environmental load.

Here, the pH of the metal compound-containing substance used in the method for producing a coating structure of the present invention is measured after immersing an electrode (manufactured by HORIBA, Ltd.: standard ToupH electrode 9615S-10D) of a pH meter (manufactured by HORIBA, Ltd.: glass electrode-type hydrogen ion concentration indicator D-51) in the metal compound-containing substance and confirming that the liquid temperature has stabilized at 25°C.

Then, in the step of applying or immersing the metal compound-containing substance on the substrate according to the method for producing a coating structure of the present invention, the metal compound-containing substance is applied or immersed on the substrate.

Specific examples of the method for applying the metal compound-containing substance onto the substrate include spray, inkjet, dispenser, nozzle coating, slit coating, die coating, roll coating, spin coating, blade coating, knife coating, wire bar coating, screen printing, and brush coating.

In the method for immersing the metal compound-containing substance on the substrate, the substrate is impregnated with the metal compound-containing substance by immersing the substrate in a container filled with the metal compound-containing substance. Also, the immersion time in the step is preferably 6 minutes or more and 1 hour or less, and more preferably 12 minutes or more and 54 minutes or less. The step of immersing the metal compound-containing substance on the substrate may be performed at room temperature or may be heated and then cooled to room temperature.

Moreover, in the immersion step according to the method for producing a coating structure of the present invention, when the metal compound-containing substance is immersed in the substrate under reduced pressure or vacuum, it is preferable in that the substrate is easily impregnated with the metal compound-containing substance, and the immersion time in the step can be shortened.

Specifically, a container filled with the metal compound-containing substance in which the substrate is immersed is placed in a decompression device, and the substrate is more easily impregnated with the metal compound-containing substance by making the inside of the container under reduced pressure or vacuum.

The degree of vacuum in the decompression device is preferably 0.05 MPa or less, more preferably 0.04 MPa or less, still more preferably 0.03 MPa or less, and particularly preferably 0.02 MPa or less. In addition, the immersion time in the immersion step under reduced pressure or vacuum is preferably 0.1 hours or more and 0.5 hours or less, and more preferably 0.2 hours or more and 0.4 hours or less.

Further, when the metal composite coating is formed on one surface, for example, only the surface of the substrate, only the surface of the substrate is immersed in the metal compound-containing substance. On the other hand, when the metal composite coating is formed on the entire peripheral surface of the substrate, the entire peripheral surface of the substrate is immersed in the metal compound-containing substance.

Next, in the reaction step according to the method for producing a coating structure of the present invention, a metal composite coating is formed by performing at least one reaction of a carbonization reaction, a carbonitriding reaction, or a nitriding reaction by heating the substrate in a state where a carbon source and/or a nitrogen source is supplied under reduced pressure or vacuum.

Here, the carbonization reaction, the carbonitriding reaction, or the nitriding reaction is a reaction including the following plurality of treatments.

First, the substrate coated with or immersed in the metal compound-containing substance is placed in a vacuum carbonitriding furnace (for example, manufactured by ORIENTAL ENGINEERING CO., LTD., model: VCQ400), and placed under reduced pressure or vacuum. Next, the substrate is heated at a preheating temperature for a predetermined preheating time under reduced pressure or vacuum. Subsequently, the substrate is further heated at a soaking temperature for a predetermined soaking time. Thereafter, by heating at a carburizing temperature, a carbonitriding temperature, or a nitrocarburizing temperature for a predetermined carburizing time, carbonitriding time, or nitrocarburizing time in a state where a carbon source and/or a nitrogen source supplied from the outside, a carburizing treatment, a carbonitriding treatment, or a nitrocarburizing treatment is performed in which carbon and/or nitrogen enters the inside from the surface of the metal compound-containing substance and the substrate, and carbon and/or nitrogen is solid-solved in the metal compound-containing substance and the substrate. Then, a diffusion treatment for diffusing carbon and/or nitrogen into the metal compound-containing substance and the substrate is performed under reduced pressure or vacuum at a diffusion temperature and a predetermined diffusion time. In this way, a metal composite coating is formed on the substrate.

Also, in the method for producing a coating structure of the present invention, the reaction step is a carbonization reaction, and the carbon source is one containing an unsaturated hydrocarbon and an inert component or a saturated hydrocarbon.

In a case where the reaction step according to the method for producing a coating structure of the present invention is a carbonization reaction, when the carbon source to be supplied into the vacuum carbonitriding furnace is one containing an unsaturated hydrocarbon and an inert component or a saturated hydrocarbon, it is preferable in that hydrogen generated by decomposition of the unsaturated hydrocarbon or the saturated hydrocarbon removes oxygen in the applied metal compound-containing substance to promote a metal carbide generation reaction.

Examples of the unsaturated hydrocarbon include acetylene. In addition, examples of the inert component include argon and nitrogen.

Further, in the method for producing a coating structure of the present invention, the reaction step is a carbonitriding reaction or a nitriding reaction, and the nitrogen source contains ammonia and an inert component.

In a case where the reaction step according to the method for producing a coating structure of the present invention is a carbonitriding reaction or a nitriding reaction, when the nitrogen source supplied into the vacuum carbonitriding furnace contains ammonia and an inert component, it is preferable in that a generation reaction of a metal carbonitride or a metal nitride is promoted. The inert component is as described above.

Furthermore, in the method for producing a coating structure of the present invention, in a case where the reaction step is a carbonitriding reaction, when the carbon source and the nitrogen source supplied into the vacuum carbonitriding furnace are those containing all of an unsaturated hydrocarbon, a nitriding reactant, and an inert component, or those containing all of a saturated hydrocarbon and a nitriding reactant, it is preferable in that a carbide generation reaction or a nitride generation reaction is easily controlled.

Examples of the nitriding reactant include ammonia and nitrogen. Examples of the saturated hydrocarbon include methane, propane, and butane. The unsaturated hydrocarbon and the inert component are as described above.

When the carburizing temperature is 800°C or higher and 1150°C or lower, the carburizing reaction of the coating sufficiently proceeds, which is preferable in that the coating quality is stabilized. The carburizing temperature is more preferably 850°C or higher and 1100°C or lower, and still more preferably 900°C or higher and 1050°C or lower.

When the carburizing time is 3 minutes or more and 2 hours or less, it is preferable in that carbon suitable for metal carbide generation can be supplied. The carburizing time is more preferably 6 minutes or more and 1 hour or less, and still more preferably 6 minutes or more and 15 minutes or less.

When the carbonitriding temperature is 700°C or higher and 1050°C or lower, it is preferable in that the carbonitriding reaction of the coating sufficiently proceeds and the coating quality is stabilized. The carbonitriding temperature is more preferably 750°C or higher and 1000°C or lower, and still more preferably 800°C or higher and 900°C or lower.

When the carbonitriding time is 3 minutes or more and 2 hours or less, it is preferable in that carbon and nitrogen necessary for metal carbonitride generation can be sufficiently supplied. The carbonitriding time is more preferably 18 minutes or more and 1 hour or less, and still more preferably 18 minutes or more and 30 minutes or less.

When the nitrocarburizing temperature is 500°C or higher and 1000°C or lower, it is preferable in that the nitrocarburizing reaction of the coating sufficiently proceeds and the coating quality is stabilized. The nitrocarburizing temperature is more preferably 500°C or higher and 900°C or lower, and still more preferably 750°C or higher and 850°C or lower.

When the nitrocarburizing time is 3 minutes or more and 2 hours or less, it is preferable in that nitrogen necessary for metal nitride generation can be sufficiently supplied. The nitrocarburizing time is more preferably 6 minutes or more and 1 hour or less, and still more preferably 6 minutes or more and 15 minutes or less.

Also, in the method for producing a coating structure of the present invention, in the reaction step, a heating temperature is 500°C or higher and 1150°C or lower.

When the heating temperature is 500°C or higher and 1150°C or lower, it is preferable in that a carburizing reaction, a carbonitriding reaction, or a nitrocarburizing reaction of the coating sufficiently proceeds and the coating quality is stabilized. The heating temperature is the above-described carburizing temperature, carbonitriding temperature, or nitrocarburizing temperature.

Further, in the method for producing a coating structure of the present invention, a heating time is 0.05 hours or more and 10 hours or less.

When the heating time is 0.05 hours or more and 10 hours or less, it is preferable in that carbon and/or nitrogen necessary for metal carbide generation, metal carbonitride generation, or metal nitride generation can be sufficiently supplied. The heating time is the carburizing time, the carbonitriding time, or the nitrocarburizing time.

The degree of vacuum in the vacuum carbonitriding furnace is preferably 1330 Pa or less, and more preferably 133 Pa or less.

By the method for producing a coating structure of the present invention described above, a coating structure having a metal composite coating formed on the substrate can be produced.

Also, the method for producing a coating structure of the present invention may further include a drying step between the step of applying or immersing the metal compound-containing substance on the substrate and the reaction step according to the method for producing a coating structure of the present invention described above.

It is preferable in that the substrate coated with or immersed in the metal compound-containing substance is placed in a stationary furnace and dried at a drying temperature of 100°C for 1 hour in that excessive impurities such as moisture can be removed.

The drying temperature in the drying step is more preferably 110°C or higher and 400°C or lower, still more preferably 120°C or higher and 300°C or lower, and particularly preferably 130°C or higher and 200°C or lower.

The drying time in the drying step is preferably 0.2 hours or more and 3 hours or less, more preferably 0.3 hours or more and 2 hours or less, and still more preferably 0.4 hours or more and 1 hour or less.

Also, the method for producing a coating structure of the present invention may further include a firing step under vacuum between the drying step and the reaction step according to the method for producing a coating structure of the present invention described above.

It is preferable in that oxygen can be removed from the metal compound by firing the substrate coated with or immersed in the dried metal compound-containing substance at a firing temperature of 750°C for 1 hour.

When the firing temperature is 750°C or higher and 1000°C or lower, it is preferable in that oxygen is efficiently removed. The firing temperature is more preferably 800°C or higher and 950°C or lower, and still more preferably 850°C or higher and 900°C or lower.

When the firing time is 1 hour or more and 3 hours or less, it is preferable in that oxygen is efficiently removed. The firing time is more preferably 0.5 hours or more and 1.5 hours or less.

Further, in the method for producing a coating structure of the present invention, the step of applying or immersing the metal compound-containing substance on the substrate and the reaction step according to the method for producing a coating structure of the present invention described above are repeated a plurality of times.

By repeating the step of applying or immersing the metal compound-containing substance on the substrate and the reaction step according to the method for producing a coating structure of the present invention described above a plurality of times, a metal composite coating is formed on the substrate a plurality of times, and a more physically and chemically stable metal composite coating can be formed.

In addition, when the metal composite coating formed by the method for producing a coating structure of the present invention contains a compound of at least one metal element selected from Ti, Nb, Mo, Hf, Ta, W, Zr, and Si, it is preferable in that durability of the coated substrate is improved.

Examples of the compound contained in the metal composite coating include metal carbides, metal nitrides, metal carbonitrides, metal oxides, metal sulfides, and metal hydroxides of at least one metal element selected from Ti, Nb, Mo, Hf, Ta, W, Zr, and Si, and metal carbides, metal nitrides, and metal carbonitrides are preferable, and a plurality of compounds may be present.

Further, when the metal composite coating formed by the method for producing a coating structure of the present invention contains a compound of at least one metal element selected from Nb, Hf, and Ta, it is more preferable in that the durability of the coated substrate is further improved.

Furthermore, when the metal composite coating formed by the method for producing a coating structure of the present invention contains at least one metal carbide selected from Ti carbide, Nb carbide, Mo carbide, Hf carbide, Ta carbide, W carbide, Zr carbide, and Si carbide, it is particularly preferable in that the coating structure in which the metal composite coating is formed on the substrate is physically and chemically stabilized.

Here, the phrase "the coating structure of the present invention is physically stabilized" means, for example, physical stability against a heat resistance test, and indicates thermal stability under a higher temperature. In addition, it may be possible to further improve physical stability against a hardness test, a nanoindentation test, or a scratch test.

Further, the phrase "the coating structure of the present invention is chemically stabilized" means, for example, chemical stability against hydrochloric acid, sulfuric acid, nitric acid, phosphoric acid, hydrofluoric acid, sodium chloride, acetic acid, oxalic acid, ammonia water, sodium hydroxide, potassium hydroxide, water vapor, hydrogen sulfide gas, ammonia gas, hydrogen gas, fluorine gas, chlorine gas, nitrogen oxide gas (NOx), or sulfur oxide gas (SOx).

With the metal composite coating formed on the produced substrate by the method for producing a coating structure of the present invention described above, it can be confirmed that the metal compound is contained in the metal composite coating from peaks of an X-ray diffraction pattern obtained by performing X-ray diffraction measurement according to the following X-ray diffraction measurement conditions and X-ray diffraction analysis conditions.

### = X-ray diffraction measurement conditions =

- Device: MiniFlexII (manufactured by Rigaku Corporation)
- Measurement range (20): 5 to 90°
- Sampling width: 0.02°
- Scanning speed: 2.0°/min
- X-ray: CuKα ray
- Voltage: 30 kV
- Current: 15 mA
- Divergence slit: 1.25°
- Scattering slit: 1.25°
- Light receiving slit: 0.3 mm

### = X-ray diffraction analysis conditions =

- Data analysis software PDXL2 manufactured by Rigaku Corporation is used.
- In order to define the peak top, the peak is smoothed by b-spline.

Furthermore, when the coating thickness of the metal composite coating formed on the produced substrate by the method for producing a coating structure of the present invention is 500 nm or less, it is preferable in that cracks in the coating and peeling of the coating itself hardly occur. The metal composite coating may have a coating thickness of 300 nm or less or 100 nm or less. This is because when cracks are generated in the metal composite coating, the substrate is oxidized and easily released as oxide, and the element in the substrate decreases. On the other hand, when the coating thickness of the metal composite coating is 1 nm or more, it is preferable in that the substrate can be sufficiently protected. The coating thickness of the metal composite coating may be 10 nm or more.

Further, the coating structure of the present invention is a coating structure having a metal composite coating on a substrate, in which
the metal composite coating is formed by performing at least one reaction of a carbonization reaction, a carbonitriding reaction, or a nitriding reaction by heating a substrate coated or immersed with a metal compound-containing substance in a state where a carbon source and/or a nitrogen source is supplied under reduced pressure or vacuum.

The coating structure of the present invention has a uniform metal composite coating on a substrate as a physically and chemically stable surface layer independent of the substrate.

In addition, the coating structure of the present invention is a coating structure having a metal-carbon composite coating on a substrate, in which the metal-carbon composite coating has a D band/G band peak area ratio in Raman spectroscopy of 0.5 or more and 2.0 or less.

When the coating structure of the present invention has a metal-carbon composite coating on a substrate and the metal-carbon composite coating has a D band/G band peak area ratio in Raman spectroscopy of 0.5 or more and 2.0 or less, it is preferable in that a physically and chemically stable surface layer can be formed, and a coating having a uniform composition can be formed.

In the coating structure of the present invention, the D band/G band peak area ratio is more preferably 0.8 or more and 2.0 or less, still more preferably 0.8 or more and 1.5 or less, and particularly preferably 1.1 or more and 1.3 or less.

Here, the Raman spectroscopy is a spectroscopy for evaluating a chemical structure and a bonding state of a carbon material. In the Raman spectrum of the carbon material, peaks are usually observed at 1300 cm⁻¹ to 1400 cm⁻¹ and 1550 cm⁻¹ to 1650 cm⁻¹. In highly crystalline graphite, a single peak is observed at 1550 cm⁻¹ to 1650 cm⁻¹, and this peak is called "G band". On the other hand, as the crystallinity decreases (crystal structure defects increase), a peak is observed at 1300 cm⁻¹ to 1400 cm⁻¹, and this peak is called "D band". Then, the D band/G band peak area ratio is an index of the amount of defects in the crystal structure of the carbon material. The smaller the D band/G band peak area ratio, the smaller the amount of defects in the crystal structure of the carbon material. In the carbon material having a small amount of defects in the crystal structure as described above, a peak is also detected at 2400 cm⁻¹ to 2800 cm⁻¹, and this peak is called "2D band". The D band/G band peak intensity ratio may also be called an R value.

The metal-carbon composite coating formed on the substrate can be confirmed to be a metal carbide from a peak (half-value width) of a Raman spectrum obtained by performing measurement according to the following Raman spectroscopy measurement conditions and Raman spectroscopy measurement conditions.

### = Raman spectroscopy measurement conditions =

- Device: Invia Qontor (manufactured by Renishaw plc.)
- Light source: 532 nm (RL532-08 150 mW)
- Objective lens: 20 times
- Grating: 1800 mm/L
- Irradiation time: 5 to 10 seconds
- Number of integrations: 1
- Slit width: 65 µm
- Laser power: 1%
- Use of Livetrac function
- 20 × 20 square map measurement (intervals of 10 µm in both X direction and Y direction)

### = Raman spectroscopy analysis conditions =

Baseline correction (intelligence polynomial: degree 6) in WiRE5.5 manufactured by Renishaw plc. and averaging spectrum processing are performed on the obtained Raman spectrum according to the Raman spectroscopy measurement conditions described above, and normalization processing is performed so that a maximum value at 1550 cm⁻¹ to 1650 cm⁻¹ is 1 in the obtained average spectrum. Next, multipeak Fitting 2 is applied to the normalized spectrum using Igor Pro ver. 8.04 manufactured by WaveMetrics, Inc., and a peak to be an initial value is set with reference to Table 1 in Section 4, Chapter 8 of Raman spectral data analysis case book (TECHNICAL INFORMATION INSTITUTE CO.,LTD). A Gaussian distribution or a Lorentzian distribution is adopted as the peak. Then, fitting is repeatedly executed so that χ-square representing the difference between the actual measurement value of the peak and the fitting value becomes as small as possible, and when χ-square converges to exceed 1.0, fitting is repeated by setting a new peak, and the fitting is repeated until χ-square becomes less than 1.0.

Each peak obtained by the above-described procedure is classified into a D band and a G band from the peak position, the sum of peak areas of the respective bands is calculated, and a value obtained by dividing the sum of peak areas of the D band by the sum of peak areas of the G band is defined as the D band/G band peak area ratio.

In addition, the coating structure of the present invention is a coating structure having a metal-carbon composite coating on a substrate, in which the metal-carbon composite coating has a D band/G band peak area ratio in Raman spectroscopy of 0.5 or more and 2.0 or less and a standard deviation of the D band/G band peak area ratio of 0.1 or more and 0.35 or less.

When the coating structure of the present invention has a metal-carbon composite coating on a substrate and the metal-carbon composite coating has a D band/G band peak area ratio in Raman spectroscopy of 0.5 or more and 2.0 or less and a standard deviation of the D band/G band peak area ratio of 0.1 or more and 0.35 or less, it is preferable in that a physically and chemically stable surface layer can be formed, and a coating having a uniform composition can be formed.

In the coating structure of the present invention, the D band/G band peak area ratio is more preferably 0.8 or more and 2.0 or less, still more preferably 0.8 or more and 1.5 or less, and particularly preferably 1.1 or more and 1.3 or less. Since the D band/G band peak area ratio is as described above, a detailed description thereof will be omitted.

Also, in the coating structure of the present invention, the standard deviation of the D band/G band peak area ratio is more preferably 0.2 or more and 0.33 or less, and still more preferably 0.23 or more and 0.30 or less.

Further, the standard deviation of the D band/G band peak area ratio can be calculated based on the D band/G band peak area ratio described above. Specifically, in the sample including the coating structure of the present invention, the standard deviation of the D band/G band peak area ratio can be calculated from the D band/G band peak area ratio for 400 points calculated from the Raman spectrum measured at 400 arbitrary measurement points, in accordance with the Raman spectroscopy analysis conditions described above.

Furthermore, in the coating structure of the present invention, when the coating thickness of the metal-carbon composite coating formed on the substrate is 300 nm or less, it is preferable in that cracks in the coating and peeling of the coating itself hardly occur.

Note that the expression "X to Y" (X and Y are arbitrary numbers) in the present description also includes the meaning of "preferably more than X" or "preferably less than Y" as well as the meaning of "X or more and Y or less" unless otherwise stated. In addition, the expression "X or more" (X is an arbitrary number) or "Y or less" (Y is an arbitrary number) also includes the intention of "preferably more than X" or "preferably less than Y".

### Advantageous Effects of Invention

The method for producing a coating structure of the present invention can produce a coating structure having a uniform metal composite coating on a substrate, which can form a physically and chemically stable surface layer independent of the substrate.

### Brief Description of Drawings

Fig. 1 is a graph showing measurement results of corrosion resistance test 1 according to Example 1 and Comparative Example 2.
Fig. 2 is a graph showing measurement results of corrosion resistance test 1 according to Example 5 and Comparative Example 5.
Fig. 3 is a graph showing measurement results of corrosion resistance test 1 according to Example 6 and Comparative Example 6.
Fig. 4 is a graph showing measurement results of corrosion resistance test 1 according to Example 7 and Comparative Example 7.
Fig. 5 is a graph showing measurement results of corrosion resistance test 1 according to Example 8 and Comparative Example 8.
Fig. 6 is a graph showing measurement results of corrosion resistance test 1 according to Example 9 and Comparative Example 5.
Fig. 7 is a graph showing measurement results of corrosion resistance test 1 according to Example 10 and Comparative Example 5.
Fig. 8 is a graph showing measurement results of corrosion resistance test 1 according to Example 11 and Comparative Example 5.
Fig. 9 is a graph showing measurement results of corrosion resistance test 1 according to Example 12 and Comparative Example 5.
Fig. 10 is a graph showing measurement results of corrosion resistance test 1 according to Example 13 and Comparative Example 5.
Fig. 11 is a graph showing measurement results of corrosion resistance test 1 according to Example 14 and Comparative Example 5.
Fig. 12 is a graph showing measurement results of corrosion resistance test 2 according to Example 15 and Comparative Example 9.
Fig. 13 is a graph showing measurement results of corrosion resistance test 2 according to Example 16 and Comparative Example 9.
Fig. 14 is a graph showing measurement results of corrosion resistance test 2 according to Example 17 and Comparative Example 9.
Fig. 15 is a graph showing measurement results of corrosion resistance test 2 according to Example 18 and Comparative Example 9.
Fig. 16 is a graph showing measurement results of corrosion resistance test 2 according to Example 19 and Comparative Example 9.
Fig. 17 is a graph showing measurement results of corrosion resistance test 2 according to Example 20 and Comparative Example 9.
Fig. 18 is a graph showing measurement results of corrosion resistance test 2 according to Example 21 and Comparative Example 9.
Fig. 19 is a graph showing measurement results of corrosion resistance test 2 according to Example 22 and Comparative Example 9.
Fig. 20 is a graph showing measurement results of corrosion resistance test 2 according to Example 23 and Comparative Example 10.
Fig. 21 is a graph showing measurement results of corrosion resistance test 2 according to Example 24 and Comparative Example 10.
Fig. 22 is a graph showing measurement results of corrosion resistance test 2 according to Example 25 and Comparative Example 10.
Fig. 23 is a graph showing measurement results of corrosion resistance test 2 according to Example 26 and Comparative Example 10.
Fig. 24 is a graph showing measurement results of corrosion resistance test 2 according to Example 27 and Comparative Example 9.
Fig. 25 is a graph showing measurement results of corrosion resistance test 2 according to Example 28 and Comparative Example 11.
Fig. 26(a) is a graph showing a measurement result of a heat resistance test of a coating structure according to Example 2, and Fig. 26(b) is a graph showing a measurement result of a heat resistance test of a tubular metal-based substrate according to Comparative Example 3.
Fig. 27(a) is a graph showing a measurement result of a heat resistance test of a coating structure according to Example 3, Fig. 27(b) is a graph showing a measurement result of a heat resistance test of a coating structure according to Example 4, and Fig. 27(c) is a graph showing a measurement result of a heat resistance test of a tubular metal-based substrate according to Comparative Example 4.

### Description of Embodiments

Hereinafter, the coating structure of the embodiment according to the present invention will be further described with reference to the following examples. However, the following examples do not limit the present invention. The JIS standard of the material of the metal-based substrate used in each Example is as described above.

### (Example 1)

A tantalate compound-containing liquid was applied to the entire surface of a metal-based substrate (SUS304) (longitudinal dimension × lateral dimension × thickness dimension: 30 mm × 35 mm × 1.5 mm) using a brush (the coating amount was 0.015 g). Next, the metal-based substrate coated with the tantalate compound-containing liquid was naturally dried. Next, the metal-based substrate coated with the naturally dried tantalate compound-containing liquid was placed in an electric furnace and fired at 350°C for 30 minutes. After firing, the metal-based substrate was air cooled until the temperature reached room temperature. At that time, a tantalate compound-dispersed coating film was formed on the metal-based substrate.

After air cooling, the metal-based substrate on which the tantalate compound-dispersed coating film was formed was placed in a vacuum carbonitriding furnace (manufactured by ORIENTAL ENGINEERING CO., LTD., model: VCQ400), heated at a preheating temperature of 850°C for 60 minutes under vacuum, and then heated at a soaking time of 1020°C for 60 minutes. Next, a carburizing treatment of carburizing the tantalate compound-dispersed coating film and the metal-based substrate at a carburizing temperature of 1020°C was performed for 35 minutes in a state in which an acetylene gas (C₂H₂) as a carbon source was supplied into the vacuum carbonitriding furnace (hereinafter, referred to as "carburizing time".). At that time, the gas pressure of the acetylene gas (C₂H₂) was 1066.576 Pa. Then, a diffusion treatment for diffusing carbon that had entered the tantalate compound-dispersed coating film and the metal-based substrate was performed at a diffusion temperature of 1020°C under vacuum for 75 minutes (hereinafter, referred to as "diffusion time".). Here, the total time of "carburizing time" and "diffusion time" is referred to as "carburizing treatment time" in Table 1. In this way, tantalum in the tantalate compound-dispersed coating film was subjected to a carbonization reaction.

Then, a coating structure according to Example 1 was obtained.

The tantalate compound-containing liquid used in Example 1 was obtained as follows.

In 120 g of a 55 mass% aqueous hydrofluoric acid solution, 137.9 g of tantalum hydroxide (Ta₂O₅ concentration: 66 mass%) manufactured by MITSUI MINING & SMELTING CO., LTD. was dissolved, and 849 mL of ion-exchanged water was added thereto to obtain a tantalum fluoride aqueous solution (Ta₂O₅ concentration: 8.2 mass%).

To 1,000 g of this tantalum fluoride aqueous solution, 27.5 g of hydrogen peroxide water (H₂O₂ concentration: 35 mass%) was added (H₂O₂/Ta molar ratio = 0.76), and the mixture was stirred for 5 minutes to obtain a tantalum compound aqueous solution.

1,000 g of this tantalum compound aqueous solution was added to 6.82 L of ammonia water (NH₃ concentration: 25 mass%) in a time shorter than 10 minutes (NH₃/Ta molar ratio = 245, NH₃/HF molar ratio = 30.7) to obtain a reaction liquid (pH 11). This reaction liquid was a slurry of a tantalate compound hydrate, in other words, a slurry of a tantalum-containing precipitate.

Next, this reaction liquid was decanted using a centrifuge and washed until the amount of released fluoride ions reached 100 mg/L or less to obtain a tantalum-containing precipitate from which the fluoride ions had been removed. At this time, ammonia water was used as a washing liquid.

Further, the tantalum-containing precipitate from which the fluoride ions had been removed was diluted with pure water to obtain a tantalum-containing precipitation slurry. A part of the tantalum-containing precipitation slurry was dried at 110°C for 24 hours and then fired at 1,000°C for 4 hours to generate Ta₂O₅, and the concentration of Ta₂O₅ contained in the tantalum-containing precipitation slurry was calculated from the weight thereof.

Then, the tantalum-containing precipitation slurry diluted with pure water, 5 mass% of dimethylamine as an organic nitrogen compound, and pure water were mixed so that the tantalum concentration of the final mixture was 5 mass% in terms of Ta₂O₅ and the weight ratio of Ta₂O₅/organic nitrogen compound was 1.0 to obtain the tantalate compound-containing liquid used in Example 1. The pH of the tantalate compound-containing liquid used in Example 1 was 12.0.

### (Example 2)

In Example 2, a tantalate compound-containing liquid was applied to the surface of a SUS protective tube (SUS304) (tube diameter × length dimension × thickness dimension: φ25 mm × 300 mm × 1.0 mm) for a thermocouple temperature sensor [K type] in a molten metal furnace using a brush (the coating amount was 0.1439 g). Next, the SUS protective tube coated with the tantalate compound-containing liquid was naturally dried. Next, the SUS protective tube coated with the naturally dried tantalate compound-containing liquid was placed in an electric furnace and fired at 350°C for 30 minutes. After firing, the metal-based substrate was air cooled until the temperature reached room temperature. At that time, a tantalate compound-dispersed coating film was formed on the surface of the SUS protective tube.

After air cooling, the SUS protective tube on which the tantalate compound-dispersed coating film was formed was placed in a vacuum carbonitriding furnace (manufactured by ORIENTAL ENGINEERING CO., LTD., model: VCQ400), heated at a preheating temperature of 850°C for 60 minutes under vacuum, and then heated at a soaking time of 1020°C for 60 minutes. Next, a carburizing treatment of carburizing the tantalate compound-dispersed coating film and the SUS protective tube at a carburizing temperature of 1020°C was performed for 35 minutes in a state in which an acetylene gas (C₂H₂) as a carbon source was supplied into the vacuum carbonitriding furnace. At that time, the gas pressure of the acetylene gas (C₂H₂) was 1066.576 Pa. Then, a diffusion treatment for diffusing carbon that had entered the tantalate compound-dispersed coating film and the SUS protective tube was performed at a diffusion temperature of 1020°C under vacuum for 75 minutes. In this way, tantalum in the tantalate compound-dispersed coating film was subjected to a carbonization reaction to perform a carbonization reaction.

Then, a coating structure according to Example 2 was obtained. The tantalate compound-containing liquid used in Example 2 was obtained in the same manner as the tantalate compound-containing liquid used in Example 1.

### (Example 3)

In Example 3, a coating structure according to Example 3 was obtained by performing the same production method as in Example 2 except that the substrate was a SUS protective tube (SUS316) (tube diameter × length dimension × thickness dimension: φ21.7 mm × 300 mm × 2.8 mm) for a thermocouple temperature sensor [K type] in a molten metal furnace (the coating amount was 0.125 g).

### (Example 4)

In Example 4, a coating structure according to Example 4 was obtained by performing the same production method as in Example 2 except that (i) the substrate was a SUS protective tube (SUS316) (tube diameter × length dimension × thickness dimension: φ21.7 mm × 300 mm × 2.8 mm) for a thermocouple temperature sensor [K type] in a molten metal furnace, (ii) the carburizing treatment was performed twice, and (iii) the carburizing treatment time per carburizing treatment was 110 minutes (the coating amount was 0.125 g).

Specifically, as described above, the first carbonization reaction was performed, and the second carbonization reaction was performed on the obtained metal-based substrate after the first carbonization reaction in the same manner as the first carbonization reaction, whereby the second tantalate compound-dispersed coating film was formed on the metal-based substrate after the first carbonization reaction. That is, in Example 4, the carburizing treatment was performed twice.

### (Example 5)

In Example 5, a coating structure according to Example 5 was obtained by performing the same production method as in Example 1 except that (i) the substrate was a metal-based substrate (SUS304) (longitudinal dimension × lateral dimension × thickness dimension: 20 mm × 20 mm × 1.0 mm), and (ii) the carburizing temperature was 1070°C (the coating amount was 0.016 g).

### (Example 6)

In Example 6, a coating structure according to Example 6 was obtained by performing the same production method as in Example 1 except that (i) the substrate was a metal-based substrate (SUS310S) (longitudinal dimension × lateral dimension × thickness dimension: 20 mm × 20 mm × 1.0 mm), and (ii) the carburizing temperature was 1070°C (the coating amount was 0.016 g).

### (Example 7)

In Example 7, a coating structure according to Example 7 was obtained by performing the same production method as in Example 1 except that (i) the substrate was a metal-based substrate (Inconel: registered trademark) (longitudinal dimension × lateral dimension × thickness dimension: 20 mm × 20 mm × 1.0 mm), and (ii) the carburizing temperature was 1070°C (the coating amount was 0.016 g).

### (Example 8)

In Example 8, a coating structure according to Example 1 was obtained by performing the same production method as in Example 1 except that (i) the substrate was a metal-based substrate (made of titanium) (longitudinal dimension × lateral dimension × thickness dimension: 20 mm × 20 mm × 1.0 mm), and (ii) the carburizing temperature was 1070°C (the coating amount was 0.016 g).

### (Example 9)

In Example 9, a coating structure according to Example 9 was obtained by performing the same production method as in Example 1 except that (i) the substrate was a metal-based substrate (SUS304) (longitudinal dimension × lateral dimension × thickness dimension: 20 mm × 20 mm × 1.0 mm), (ii) a niobate compound-containing liquid was applied to the entire surface of the substrate using a brush (the coating amount was 0.0135 g), (iii) the carburizing temperature was 1070°C, and (iv) the carburizing treatment time was 57 minutes (the carburizing time was 18 min, the diffusion time was 39 min).

The niobate compound-containing liquid used in Example 9 was obtained as follows.

100 g of niobium pentoxide was dissolved in 200 g of a 55 mass% aqueous hydrofluoric acid solution, and 830 mL of ion-exchanged water was added thereto to obtain a niobium fluoride aqueous solution (Nb₂O₅ = 8.84 mass%).

200 mL of this niobium fluoride aqueous solution was added to 1 L of ammonia water (NH₃ concentration: 25 mass%) in a time shorter than 1 minute (NH₃/Nb₂O₅ molar ratio = 177.9, NH₃/HF molar ratio = 12.2) to obtain a reaction liquid (pH 11). This reaction liquid was a slurry of a niobate compound hydrate, in other words, a slurry of a niobium-containing precipitate.

Next, this reaction liquid was decanted using a centrifuge and washed until the amount of released fluoride ions reached 100 mg/L or less to obtain a niobium-containing precipitate from which the fluoride ions had been removed. At this time, ammonia water was used as a washing liquid.

Further, the niobium-containing precipitate from which the fluoride ions had been removed was diluted with pure water to obtain a slurry. A part of the niobium-containing precipitation slurry was dried at 110°C for 24 hours and then fired at 1000°C for 4 hours to generate Nb₂O₅, and the concentration of Nb₂O₅ contained in the niobium-containing precipitation slurry was calculated from the weight thereof.

Then, pure water was added to the niobium-containing precipitation slurry diluted with pure water, and a 50 mass% dimethylamine aqueous solution as an organic nitrogen compound was added thereto so as to have a dimethylamine concentration of 7.2 mass%, thereby preparing a mixture so as to have a Nb₂O₅ solid concentration of 24.0 mass%.

The slurry was stirred for 48 hours to obtain the niobate compound-containing liquid used in Example 9. The pH of the niobate compound-containing liquid used in Example 9 was 11.0.

### (Example 10)

In Example 10, a coating structure according to Example 10 was obtained by performing the same production method as in Example 1 except that (i) the substrate was a metal-based substrate (SUS304) (longitudinal dimension × lateral dimension × thickness dimension: 20 mm × 20 mm × 1.0 mm), (ii) a titanate compound-containing liquid was applied to the entire surface of the substrate using a brush (the coating amount was 0.01 g), (iii) the carburizing temperature was 1070°C, and (iv) the carburizing treatment time was 57 minutes (the carburizing time was 18 min, the diffusion time was 39 min).

The titanate compound-containing liquid used in Example 10 was obtained as follows.

33.3 g of titanyl sulfate (manufactured by Tayca Corporation, TiO₂ concentration: 33.3 mass%, sulfuric acid concentration: 51.1 mass%) was added to 66.7 g of ion-exchanged water, and the mixture was allowed to stand at 90°C or higher for 1 hour for dissolution to obtain an aqueous titanyl sulfate solution (titanium concentration (in terms of TiO2) 11 mass%, sulfuric acid 17 mass%, pH 1 or less).

100 g of this aqueous titanyl sulfate solution was added to 100 g of 50 mass% dimethylamine (the amount of amine of 6.4 mol with respect to 1 mol of sulfuric acid in the aqueous titanyl sulfate solution) over a period of less than 1 minute. Thereafter, the mixture was stirred for 15 minutes to obtain a neutralization reaction liquid (pH 12). This neutralization reaction liquid was a slurry of a titanium-containing substance, in other words, a slurry of a titanium-containing precipitate.

Next, this neutralization reaction liquid was decanted using a centrifuge and washed until the sulfuric acid of the supernatant liquid reached 100 mg/L or less to obtain a titanium-containing precipitate from which the sulfuric acid had been removed. At this time, ammonia water was used as a washing liquid.

TiO₂ was generated by firing a part of the titanium-containing precipitate at 1,000°C for 4 hours, and the TiO₂ concentration contained in the titanium-containing precipitate was calculated from the mass of TiO₂. The TiO₂ concentration was 11.0 mass%.

Then, 45 g of the titanium-containing precipitate and 5 g (0.443 mol with respect to 1 mol of Ti in the titanium-containing precipitate) of tetramethylammonium hydroxide pentahydrate (TMAH concentration: 50 mass%) were mixed, and the mixture was shaken with a paint shaker for 24 hours to obtain the titanate compound-containing liquid used in Example 10.

### (Example 11)

In Example 11, a coating structure according to Example 11 was obtained by performing the same production method as in Example 1 except that (i) the substrate was a metal-based substrate (SUS304) (longitudinal dimension × lateral dimension × thickness dimension: 20 mm × 20 mm × 1.0 mm), (ii) a zirconate compound-containing liquid was applied to the entire surface of the substrate using a brush (the coating amount was 0.02 g), (iii) the carburizing temperature was 1070°C, and (iv) the carburizing treatment time was 57 minutes (the carburizing time was 18 min, the diffusion time was 39 min).

The zirconate compound-containing liquid used in Example 11 was obtained as follows.

3.01 g (0.01 mol) of zirconium sulfate monohydrate was dissolved in 2.50 g (0.014 mol) of a 55 mass% sulfuric acid aqueous solution, and 25 g of ion-exchanged water and 2.5 g (0.026 mol) of 35 mass% hydrogen peroxide water were added thereto (H₂O₂/ZrO₂ molar ratio =2.6) to obtain a zirconium sulfate aqueous solution containing 4.3 mass% of zirconium in terms of ZrO₂.

Next, the entire amount of the zirconium sulfate aqueous solution was added to 100 g (1.47 mol) of ammonia water (NH₃ concentration: 25 mass%) in a time shorter than 1 minute (NH₃/ZrO₂ molar ratio = 147, NH₃/SO₄²⁻ molar ratio = 43), and a reaction liquid was obtained by a so-called reverse neutralization reaction. This reaction liquid was a slurry of a zirconate compound hydrate, in other words, a slurry of a zirconium-containing precipitate.

The reaction liquid was decanted using a centrifuge and washed until the conductivity reached 500 µS/cm or less to obtain a zirconium-containing precipitate from which the sulfur content had been removed. At this time, ammonia water was used as a washing liquid.

Furthermore, the zirconium-containing precipitate from which the sulfur content had been removed was diluted with pure water to obtain a zirconium-containing precipitation slurry from which the sulfur content had been removed. A part of the zirconium-containing precipitation slurry from which the sulfur content had been removed was dried at 110°C for 24 hours and then fired at 1,000°C for 4 hours to generate ZrO₂, and the concentration of ZrO₂ contained in the zirconium-containing precipitation slurry from which the sulfur content had been removed was calculated from the weight thereof.

Then, the zirconium-containing precipitation slurry from which the sulfur component had been removed diluted with pure water was mixed with 13.7 g (0.023 mol) of 15 mass% tetramethylammonium hydroxide (TMAH) and 28.5 g of ion-exchanged water so that the zirconium concentration of the final mixture was 4.5 mass% in terms of ZrO2, and the tetramethylammonium hydroxide (TMAH) concentration was 7.2 mass% (molar ratio of TMAH/ZrO₂ = 2.2), and the mixture was held for 1 hour while the liquid temperature was maintained at room temperature (25°C) while stirring the mixture to obtain the zirconate compound-containing liquid used in Example 11. The pH of the zirconate compound-containing liquid used in Example 11 was 13.7.

### (Example 12)

In Example 12, a coating structure according to Example 12 was obtained by performing the same production method as in Example 1 except that (i) the substrate was a metal-based substrate (SUS304) (longitudinal dimension × lateral dimension × thickness dimension: 20 mm × 20 mm × 1.0 mm), (ii) a hafnate compound-containing liquid was applied to the entire surface of the substrate using a brush (the coating amount was 0.014 g), (iii) the carburizing temperature was 1070°C, and (iv) the carburizing treatment time was 57 minutes (the carburizing time was 18 min, the diffusion time was 39 min).

The hafnate compound-containing liquid used in Example 12 was obtained as follows.

To 76.0 g of hafnium oxide (purity: 98%, powder, manufactured by Kojundo Chemical Lab. Co., Ltd.), 105.1 g of 55 mass% hydrofluoric acid and 796.9 g of pure water were added, heated to 80°C using a water bath, and dissolved by stirring for 24 hours to obtain a hydrofluoric acid solution of a hafnium compound. A hafnium complex aqueous solution obtained by adding 2.2 g of 35 mass% hydrogen peroxide water to 60 g of the hydrofluoric acid solution of a hafnium compound (H₂O₂/Hf molar ratio = 1.0) was stirred for 5 minutes, and then gradually added to 377.2 g of 25 mass% ammonia water (NH₃/Hf molar ratio = 250). Thereafter, the mixture was stirred for 5 minutes to obtain a neutralization reaction liquid containing hafnium hydroxide as a deposit.

Next, the neutralization reaction liquid was decanted using a centrifuge to recover a deposit (containing hafnium hydroxide). The recovered deposit and 200 g of 25 mass% ammonia water were mixed and slurried, and then decanted again to recover the deposit. The decantation and the recovery step of the deposit (containing hafnium hydroxide) were repeated three times.

Then, 31.1 g of 25 mass% TMAH was added to the recovered deposit (containing hafnium hydroxide) to obtain a mixed solution. Pure water was added until the total weight of the mixed solution reached 77.7 g so that the final hafnium concentration was 6 mass% in terms of HfO₂, and the mixed solution was stirred for 6 hours to obtain a hafnate compound-containing liquid used in Example 12. The pH of the hafnate compound-containing liquid used in Example 12 was 14.8.

### (Example 13)

In Example 13, a coating structure according to Example 13 was obtained by performing the same production method as in Example 1 except that (i) the substrate was a metal-based substrate (SUS304) (longitudinal dimension × lateral dimension × thickness dimension: 20 mm × 20 mm × 1.0 mm), (ii) a tungstate compound-containing liquid was applied to the entire surface of the substrate using a brush (the coating amount was 0.0165 g), (iii) the carburizing temperature was 1070°C, and (iv) the carburizing treatment time was 57 minutes (the carburizing time was 18 min, the diffusion time was 39 min).

The tungstate compound-containing liquid used in Example 13 was obtained as follows.

100 g of tungsten trioxide was dissolved in 200 g of a 55 mass% sulfuric acid aqueous solution, and ion-exchanged water was added to obtain a tungsten sulfate aqueous solution containing 100 g/L of tungsten in terms of WO₃. 200 mL of this tungsten sulfate aqueous solution was added to 1 L of ammonia water (NH₃ concentration: 25 mass%) in a time shorter than 1 minute (NH₃/WO3 molar ratio = 170.47, NH₃/SO₄²⁻ molar ratio = 13.11) to obtain a reaction liquid (pH 11). This reaction liquid was a slurry of a tungstate compound hydrate, in other words, a slurry of a tungsten-containing precipitate.

Next, the reaction liquid was decanted using a centrifuge and washed until the conductivity reached 500 µS/cm or less to obtain a tungsten-containing precipitate from which the sulfur content had been removed. At this time, ammonia water was used as a washing liquid.

Furthermore, the tungsten-containing precipitate from which the sulfur content had been removed was diluted with pure water to obtain a tungsten-containing precipitation slurry from which the sulfur content had been removed. A part of the tungsten-containing precipitation slurry from which the sulfur content had been removed was dried at 110°C for 24 hours and then fired at 1,000°C for 4 hours to generate WO₃, and the concentration of WO₃ contained in the tungsten-containing precipitation slurry from which the sulfur content had been removed was calculated from the weight thereof.

Then, the tungsten-containing precipitation slurry from which the sulfur content had been removed diluted with pure water was mixed with 2 mass% methylamine and pure water so that the tungsten concentration of the final mixture was 10 mass% in terms of WO₃, and the mixture was held for 1 hour while the liquid temperature was maintained at room temperature (25°C) while stirring the mixture to obtain the tungstate compound-containing liquid used in Example 13. The pH of the tungstate compound-containing liquid used in Example 13 was 8.2.

### (Example 14)

In Example 14, a coating structure according to Example 14 was obtained by performing the same production method as in Example 1 except that (i) the substrate was a metal-based substrate (SUS304) (longitudinal dimension × lateral dimension × thickness dimension: 20 mm × 20 mm × 1.0 mm), (ii) a molybdate compound-containing liquid was applied to the entire surface of the substrate using a brush (the coating amount was 0.017 g), (iii) the carburizing temperature was 1070°C, and (iv) the carburizing treatment time was 57 minutes (the carburizing time was 18 min, the diffusion time was 39 min).

The molybdate compound-containing liquid used in Example 14 was obtained as follows.

100 g of molybdenum trioxide was dissolved in 200 g of a 55 mass% sulfuric acid aqueous solution, and ion-exchanged water was added to obtain a molybdenum sulfate aqueous solution containing 100 g/L of molybdenum in terms of MoO₃. 200 mL of this molybdenum sulfate aqueous solution was added to 1 L of ammonia water (NH₃ concentration: 25 mass%) in a time shorter than 1 minute (NH₃/MoO₃ molar ratio = 105.66, NH₃/SO₄²⁻ molar ratio = 65.56) to obtain a reaction liquid (pH 11). This reaction liquid was a slurry of a molybdate compound hydrate, in other words, a slurry of a molybdenum-containing precipitate.

Next, the reaction liquid was decanted using a centrifuge and washed until the conductivity reached 500 µS/cm or less to obtain a molybdenum-containing precipitate from which the sulfur content had been removed. At this time, ammonia water was used as a washing liquid.

Furthermore, the molybdenum-containing precipitate from which the sulfur content had been removed was diluted with pure water to obtain a molybdenum-containing precipitation slurry from which the sulfur content had been removed. A part of the molybdenum-containing precipitation slurry from which the sulfur content had been removed was dried at 110°C for 24 hours and then fired at 1,000°C for 4 hours to generate MoO₃, and the concentration of MoO₃ contained in the molybdenum-containing precipitation slurry from which the sulfur content had been removed was calculated from the weight thereof.

Then, the molybdenum-containing precipitation slurry from which the sulfur content had been removed diluted with pure water was mixed with 2 mass% methylamine and pure water so that the molybdenum concentration of the final mixture was 10 mass% in terms of MoO₃, and the mixture was held for 1 hour while the liquid temperature was maintained at room temperature (25°C) while stirring the mixture to obtain the molybdate compound-containing liquid used in Example 14. The pH of the molybdate compound-containing liquid used in Example 14 was 9.7.

### (Example 15)

The coating structure according to Example 15 was obtained by performing the same production method as in Example 6.

### (Example 16)

In Example 16, a coating structure according to Example 16 was obtained by performing the same production method as in Example 1 except that (i) the substrate was a metal-based substrate (SUS310S) (longitudinal dimension × lateral dimension × thickness dimension: 20 mm × 20 mm × 1.0 mm), (ii) a niobate compound-containing liquid was applied to the entire surface of the substrate using a brush (the coating amount was 0.0135 g), and (iii) the carburizing temperature was 1070°C.

The niobate compound-containing liquid used in Example 16 was obtained in the same manner as the niobate compound-containing liquid used in Example 9.

### (Example 17)

In Example 17, a coating structure according to Example 17 was obtained by performing the same production method as in Example 1 except that (i) the substrate was a metal-based substrate (SUS310S) (longitudinal dimension × lateral dimension × thickness dimension: 20 mm × 20 mm × 1.0 mm), (ii) a titanate compound-containing liquid was applied to the entire surface of the substrate using a brush (the coating amount was 0.01 g), and (iii) the carburizing temperature was 1070°C.

The titanate compound-containing liquid used in Example 17 was obtained in the same manner as the titanate compound-containing liquid used in Example 10.

### (Example 18)

In Example 18, a coating structure according to Example 18 was obtained by performing the same production method as in Example 1 except that (i) the substrate was a metal-based substrate (SUS310S) (longitudinal dimension × lateral dimension × thickness dimension: 20 mm × 20 mm × 1.0 mm), (ii) a zirconate compound-containing liquid was applied to the entire surface of the substrate using a brush (the coating amount was 0.02 g), and (iii) the carburizing temperature was 1070°C.

The zirconate compound-containing liquid used in Example 18 was obtained in the same manner as the zirconate compound-containing liquid used in Example 11.

### (Example 19)

In Example 19, a coating structure according to Example 19 was obtained by performing the same production method as in Example 1 except that (i) the substrate was a metal-based substrate (SUS310S) (longitudinal dimension × lateral dimension × thickness dimension: 20 mm × 20 mm × 1.0 mm), (ii) a hafnate compound-containing liquid was applied to the entire surface of the substrate using a brush (the coating amount was 0.0139 g), and (iii) the carburizing temperature was 1070°C.

The hafnate compound-containing liquid used in Example 19 was obtained in the same manner as the hafnate compound-containing liquid used in Example 12.

### (Example 20)

In Example 20, a coating structure according to Example 20 was obtained by performing the same production method as in Example 1 except that (i) the substrate was a metal-based substrate (SUS310S) (longitudinal dimension × lateral dimension × thickness dimension: 20 mm × 20 mm × 1.0 mm), (ii) a tungstate compound-containing liquid was applied to the entire surface of the substrate using a brush (the coating amount was 0.0165 g), and (iii) the carburizing temperature was 1070°C.

The tungstate compound-containing liquid used in Example 20 was obtained in the same manner as the tungstate compound used in Example 13.

### (Example 21)

In Example 21, a coating structure according to Example 21 was obtained by performing the same production method as in Example 1 except that (i) the substrate was a metal-based substrate (SUS310S) (longitudinal dimension × lateral dimension × thickness dimension: 20 mm × 20 mm × 1.0 mm), (ii) a molybdate compound-containing liquid was applied to the entire surface of the substrate using a brush (the coating amount was 0.0173 g), and (iii) the carburizing temperature was 1070°C.

The molybdate compound-containing liquid used in Example 21 was obtained in the same manner as the molybdate compound-containing liquid used in Example 14.

### (Example 22)

In Example 22, a coating structure according to Example 22 was obtained by performing the same production method as in Example 1 except that (i) the substrate was a metal-based substrate (SUS310S) (longitudinal dimension × lateral dimension × thickness dimension: 20 mm × 20 mm × 1.0 mm), (ii) a silicate compound-containing liquid was applied to the entire surface of the substrate using a brush (the coating amount was 0.0169 g), and (iii) the carburizing temperature was 1070°C.

The silicate compound-containing liquid used in Example 22 was obtained as follows.

To 11.0 g of tetraethoxysilane (TEOS, manufactured by TOKYO OHKA KOGYO CO., LTD.) as a raw material substance containing silicon, 0.1 g of acetic acid (manufactured by Hayashi Pure Chemical Ind., Ltd.) as an acidic aqueous solution, 15 g of industrial ethanol (Solmix AP-7 (mixed alcohol solvent containing 85.5 mass% of ethanol, 9.6 mass% of 1-propanol, 4.9 mass% of 2-propanol, and 0.2 mass% or less of water), manufactured by TOYO SEKIYU KAGAKU K.K.), and 8 g of pure water were added in a 100 mL beaker, and the mixture was mixed at room temperature (25°C) for 20 hours while being stirred with a stirrer chip to obtain 6 g of a dried silicon compound as a transparent deposit.

Next, to 6 g of the obtained dried silicon compound were added 2.6 g of 40 mass% methylamine (manufactured by MITSUBISHI GAS CHEMICAL COMPANY, INC.) and 8.9 g of pure water, and the mixture was mixed at room temperature (25°C) for 10 hours while being stirred with a stirrer chip to obtain the silicate compound-containing liquid used in Example 22.

### (Example 23)

The coating structure according to Example 23 was obtained by performing the same production method as in Example 5.

### (Example 24)

In Example 24, a coating structure according to Example 24 was obtained by performing the same production method as in Example 1 except that (i) the substrate was a metal-based substrate (SUS304) (longitudinal dimension × lateral dimension × thickness dimension: 20 mm × 20 mm × 1.0 mm), (ii) a mixed solution of a tantalate compound-containing liquid and a titanate compound-containing liquid was applied to the entire surface of the substrate using a brush (the coating amount was 0.013 g), and (iii) the carburizing temperature was 1070°C.

As the mixed solution of a tantalate compound-containing liquid and a titanate compound-containing liquid used in Example 24, a tantalate compound-containing liquid obtained in the same manner as the tantalate compound-containing liquid used in Example 1 and a titanate compound-containing liquid obtained in the same manner as the titanate compound-containing liquid used in Example 10 were adjusted so as to be each 50 mass% in mass%, and mixed.

### (Example 25)

In Example 25, a coating structure according to Example 25 was obtained by performing the same production method as in Example 1 except that (i) the substrate was a metal-based substrate (SUS304) (longitudinal dimension × lateral dimension × thickness dimension: 20 mm × 20 mm × 1.0 mm), (ii) a mixed solution of a tantalate compound-containing liquid and a tungsten oxide-containing liquid was applied to the entire surface of the substrate using a brush (the coating amount was 0.016 g), and (iii) the carburizing temperature was 1070°C.

As the mixed solution of a tantalate compound-containing liquid and a tungstate compound-containing liquid used in Example 25, a tantalate compound-containing liquid obtained in the same manner as the tantalate compound-containing liquid used in Example 1 and a tungstate compound-containing liquid obtained in the same manner as the tungstate compound-containing liquid used in Example 13 were adjusted so as to be each 50 mass% in mass%, and mixed.

### (Example 26)

In Example 26, a coating structure according to Example 26 was obtained by performing the same production method as in Example 1 except that (i) the substrate was a metal-based substrate (SUS304) (longitudinal dimension × lateral dimension × thickness dimension: 20 mm × 20 mm × 1.0 mm), (ii) the carburizing temperature was 1070°C, (iii) the carburizing treatment was performed twice, and (iv) the carburizing treatment time per carburizing treatment was 110 minutes (the coating amount was 0.016 g).

### (Example 27)

In Example 27, a coating structure according to Example 27 was obtained by performing the same production method as in Example 1 except that (i) the substrate was a metal-based substrate (SUS310S) (longitudinal dimension × lateral dimension × thickness dimension: 20 mm × 20 mm × 1.0 mm), (ii) the carburizing temperature was 1070°C, ((iii) the carburizing treatment was performed twice, and (iv) the carburizing treatment time per carburizing treatment was 110 minutes (the coating amount was 0.016 g).

### (Example 28)

In Example 28, a coating structure according to Example 28 was obtained by performing the same production method as in Example 1 except that (i) the substrate was a metal-based substrate (Inconel: registered trademark) (longitudinal dimension × lateral dimension × thickness dimension: 20 mm × 20 mm × 1.0 mm), (ii) the carburizing temperature was 1070°C, (iii) the carburizing treatment was performed twice, and (iv) the carburizing treatment time per carburizing treatment was 110 minutes (the coating amount was 0.016 g).

### (Example 29)

The coating structure according to Example 29 was obtained by performing the same production method as in Example 5.

### (Comparative Example 1)

Comparative Example 1 is a carbon-based substrate, and is specifically a graphite extruded material (longitudinal dimension × lateral dimension × thickness dimension: 50 mm × 50 mm × 3 mm). No coating film such as a tantalate compound-dispersed coating film is formed on the substrate according to Comparative Example 1.

### (Comparative Example 2)

Comparative Example 2 is a metal-based substrate, and is specifically the metal-based substrate (SUS304) used in Example 1 (longitudinal dimension × lateral dimension × thickness dimension: 30 mm × 35 mm × 1.5 mm). No coating film such as a tantalate compound-dispersed coating film is formed on the substrate according to Comparative Example 2.

### (Comparative Example 3)

Comparative Example 3 is a tubular metal-based substrate, and is specifically the SUS protective tube (tube diameter × length dimension × thickness dimension: φ25 mm × 300 mm × 1.0 mm) for a thermocouple temperature sensor [K type] in a molten metal furnace used in Example 2. No coating film such as a tantalate compound-dispersed coating film is formed on the substrate according to Comparative Example 3.

### (Comparative Example 4)

Comparative Example 4 is a tubular metal-based substrate, and is specifically the SUS protective tube (SUS316) (tube diameter × length dimension × thickness dimension: φ21.7 mm × 300 mm × 2.8 mm) for a thermocouple temperature sensor [K type] in a molten metal furnace used in Examples 3 and 4. No coating film such as a tantalate compound-dispersed coating film is formed on the substrate according to Comparative Example 4.

### (Comparative Example 5)

Comparative Example 5 is a metal-based substrate, and is specifically the metal-based substrate (SUS304) (longitudinal dimension × lateral dimension × thickness dimension: 20 mm × 20 mm × 1.0 mm) used in Examples 5, 9 to 14, 22, and 23. No coating film such as a tantalate compound-dispersed coating film is formed on the substrate according to Comparative Example 5.

### (Comparative Example 6)

Comparative Example 6 is a metal-based substrate, and is specifically the metal-based substrate (SUS304) (longitudinal dimension × lateral dimension × thickness dimension: 20 mm × 20 mm × 1.0 mm) used in Examples 6, and 15 to 21. No coating film such as a tantalate compound-dispersed coating film is formed on the substrate according to Comparative Example 6.

### (Comparative Example 7)

Comparative Example 7 is a metal-based substrate, and is specifically the metal-based substrate (Inconel: registered trademark) (longitudinal dimension × lateral dimension × thickness dimension: 20 mm × 20 mm × 1.0 mm) used in Example 7. No coating film such as a tantalate compound-dispersed coating film is formed on the substrate according to Comparative Example 7.

### (Comparative Example 8)

Comparative Example 8 is a metal-based substrate, and is specifically the metal-based substrate (made of titanium) (longitudinal dimension × lateral dimension × thickness dimension: 20 mm × 20 mm × 1.0 mm) used in Example 8. No coating film such as a tantalate compound-dispersed coating film is formed on the substrate according to Comparative Example 8.

### (Comparative Example 9)

Comparative Example 9 was obtained in the same manner as Comparative Example 6.

### (Comparative Example 10)

Comparative Example 10 was obtained in the same manner as Comparative Example 5.

### (Comparative Example 11)

Comparative Example 11 was obtained in the same manner as Comparative Example 7.

### (Comparative Example 12)

Comparative Example 12 was obtained in the same manner as Comparative Example 5.

### (Reference Example 1)

Reference Example 1 was a tantalum carbide powder produced as follows.

120 kg of tantalum oxide manufactured by Mitsui Mining & Smelting Corporation and 22 kg of carbon black were weighed on a scale, and stirred and mixed for 5 minutes with a vertical mixer to obtain a mixed powder.

This mixed powder was filled in carbon containers (2 kg/container), supplied into a resistance heating type hydrogen furnace at a ratio of 2 containers per 3 hours, and fired at a temperature of 1,700°C for 14 hours to perform primary carbonization, thereby obtaining a primary carbide.

This primary carbide was filled in a carbon crucible (100 kg/crucible), charged into a high frequency induction heating type vacuum furnace, and fired at a temperature of 1,800°C for 5 hours to obtain a secondary carbide.

The secondary carbide cooled to room temperature in a high frequency induction heating type vacuum furnace was taken out from the carbon crucible, and coarsely pulverized into a mass having a diameter of 2 cm or less using a jaw crusher.

After the coarse pulverization, the coarsely pulverized secondary carbide is finely pulverized using a jet mill which is a pneumatic pulverizer. The jet mill used for fine pulverization was set to a feed rate of 10 kg/hr and a wind speed of 2.5 m/min.

Then, the finely pulverized secondary carbide was classified with a vibrating sieve, and the obtained undersize (fine particle side) was collected to obtain a tantalum carbide powder according to Reference Example 1.

Then, the following physical property values were measured for the coating structures according to Examples 1 to 29, the carbon-based substrate according to Comparative Example 1, the metal-based substrates according to Comparative Examples 2, and 5 to 12, the tubular metal-based substrates according to Comparative Examples 3 and 4, and the tantalum carbide powder according to Reference Example 1, and an evaluation test was performed. Hereinafter, a method for measuring the physical property values and a test method for the evaluation test will be described. Physical property values of the coating structures according to Examples 1 to 29, the carbon-based substrate according to Comparative Example 1, the metal-based substrates according to Comparative Examples 2, and 5 to 12, the tubular metal-based substrates according to Comparative Examples 3 and 4, and the tantalum carbide powder according to Reference Example 1 are shown in Table 1 to 3, and evaluation test results thereof are shown in Tables 4 to 6.

### <Element analysis>

The sample was appropriately diluted with dilute hydrochloric acid as necessary, and the mass fraction in terms of metal was measured in accordance with JIS K0116:2014 using ICP emission spectrometry (manufactured by Agilent Technologies, Inc.: AG-5110).

### <Dynamic light scattering>

The evaluation of the particle size distribution of the metal compound-containing substances used in Examples 1 to 29 was performed in accordance with JIS Z 8828:2019 "Particle size analysis-dynamic light scattering" using a zeta potential/particle size/molecular weight analyzer (manufactured by Otsuka Electronics Co., Ltd.: ELSZ-2000). Also, in order to remove dust and the like in the solution to be measured immediately before measurement, the content was filtered with a filter having a pore size of 2 µm, and subjected to ultrasonic treatment at 28 kHz for 3 minutes with an ultrasonic cleaner (manufactured by AS ONE Corporation: VS-100III). The particle size (D50) refers to a median diameter (D50) that is a particle size indicating a 50% cumulative value of a cumulative distribution curve.

### <Light transmittance measurement>

4 ml of the metal compound-containing substances used in Examples 1 to 29 was placed in a quartz cell having an optical path length of 5.0 mm, and the light transmittance of the metal compound-containing substances used in Examples 1 to 29 in the wavelength region of 500 nm to 700 nm was measured according to the light transmittance measurement conditions or the light transmittance measurement conditions (containing Si) described above using a spectrophotometer.

### <Corrosion resistance test>

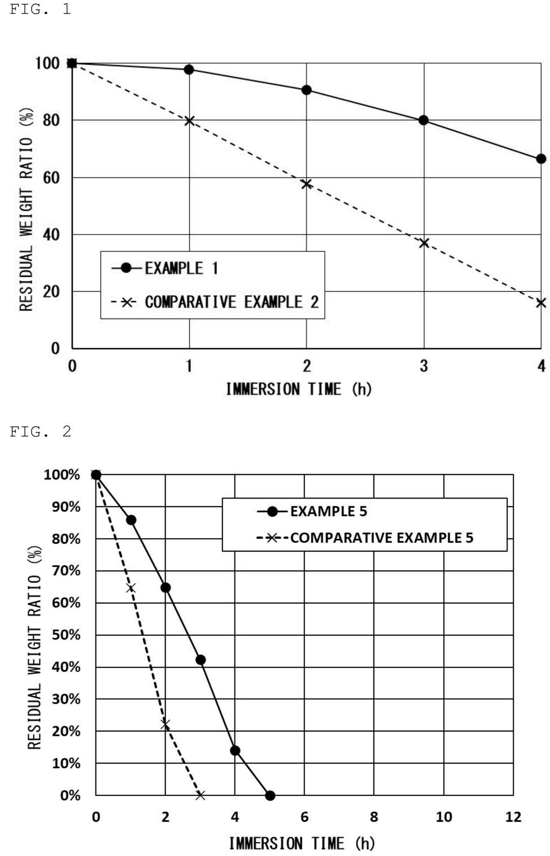

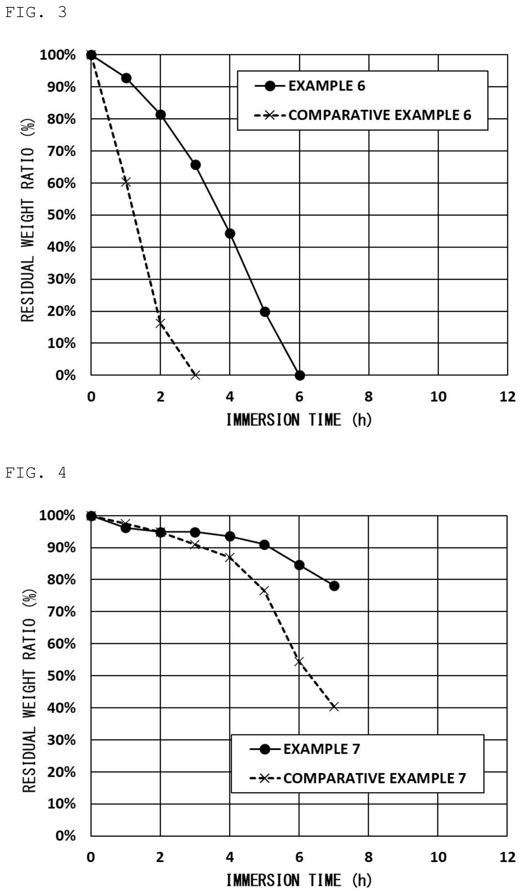

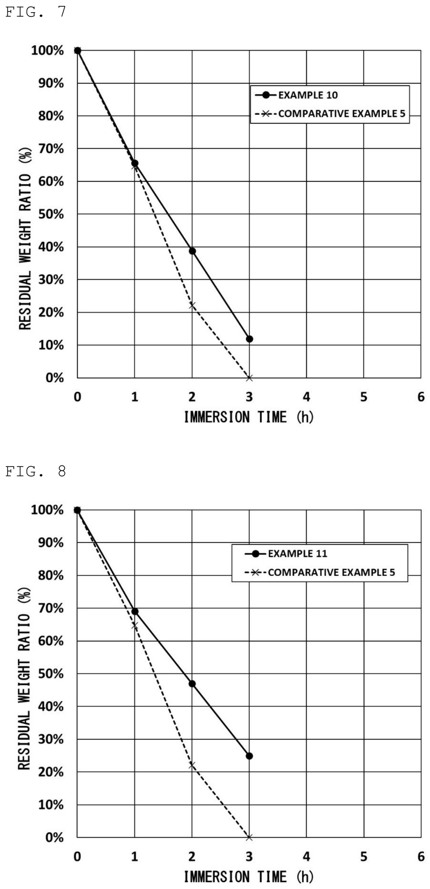

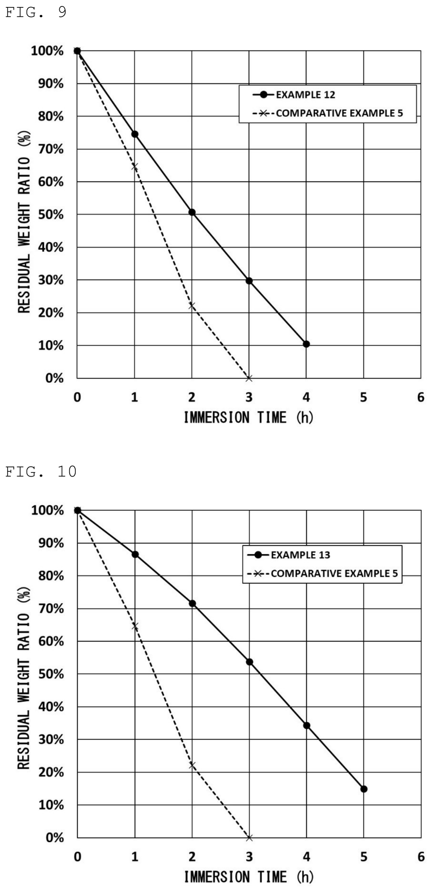

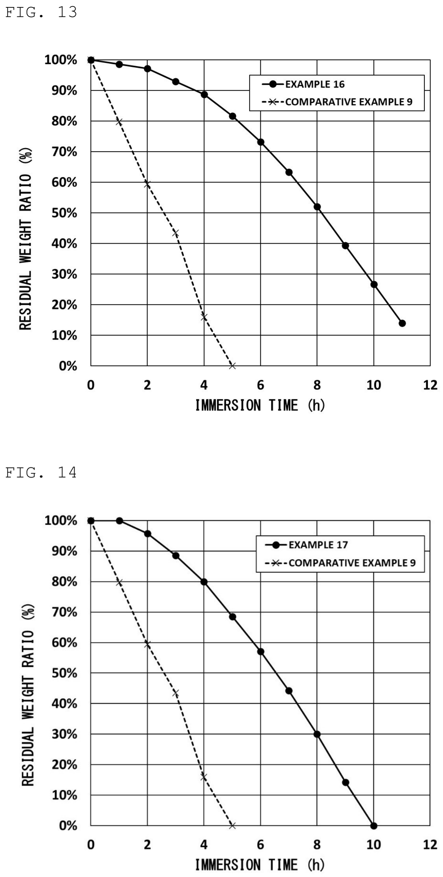

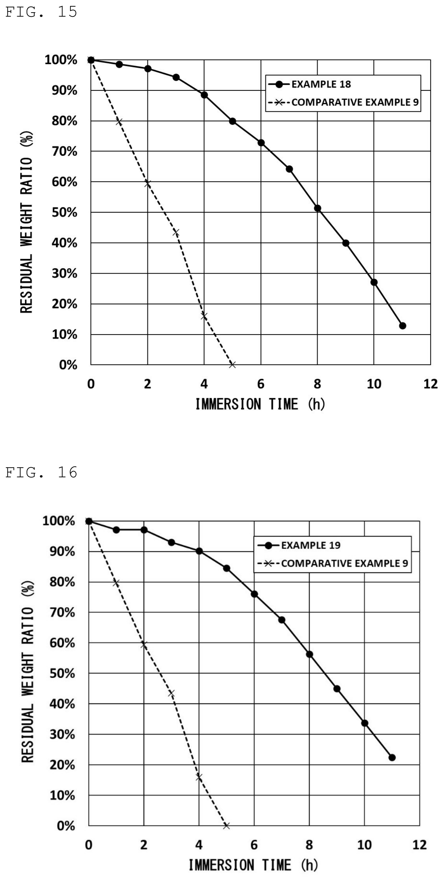

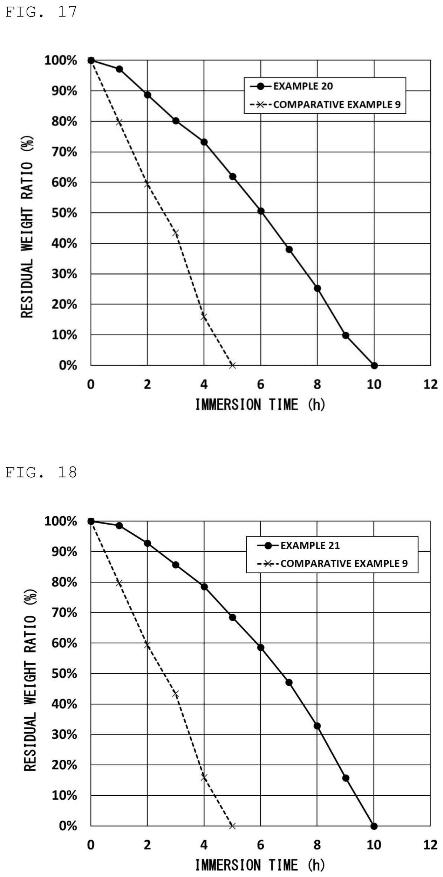

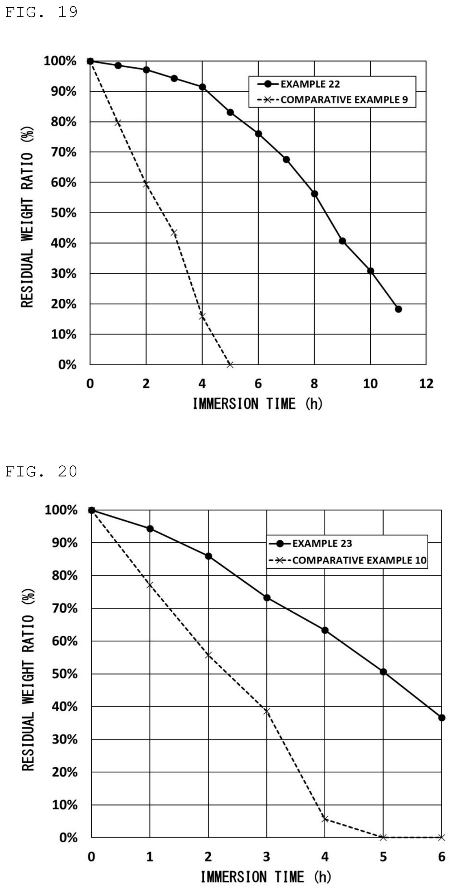

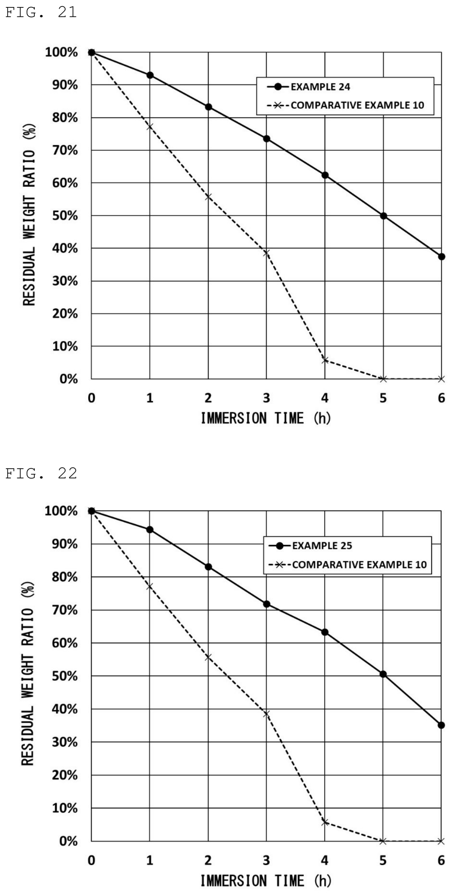

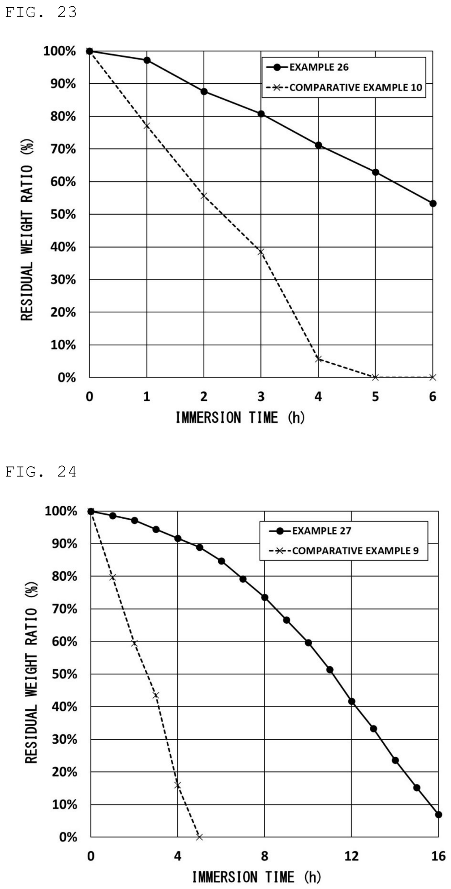

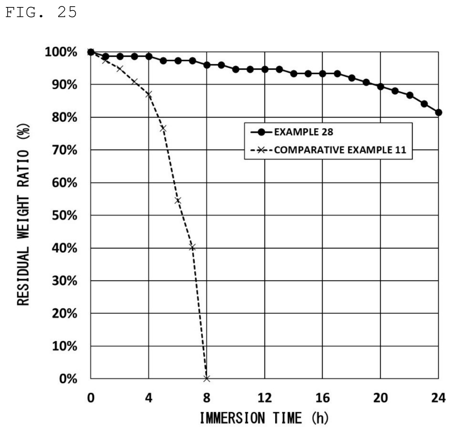

The coating structures according to Examples 1 to 29, the carbon-based substrate according to Comparative Example 1, the metal-based substrates according to Comparative Examples 2, and 5 to 12, the tubular metal-based substrates according to Comparative Examples 3 and 4, and the tantalum carbide powder according to Reference Example 1 were subjected to a corrosion resistance test under the following three test conditions. The "residual weight ratio" shown in Tables 4 to 6 was calculated according to the formula "(Weight after corrosion resistance test)/(weight before corrosion resistance test) × 100" by measuring the weight after the corrosion resistance test, that is, the weight after elapse of immersion time with the weight before the corrosion resistance test as 100%. In addition, the "residual weight ratio" shown in Figs. 1 to 25 was calculated by the formula "(Weight at each lapse of hour)/(weight before corrosion resistance test) × 100" by measuring the weight at each lapse of an hour of immersion time with the weight before the corrosion resistance test as 100%.

### <Corrosion resistance test 1>

The weight before the corrosion resistance test 1 (hereinafter, referred to as the weight before test 1.) was measured for each of the coating structures according to Examples 1, and 5 to 14 and the metal-based substrates according to Comparative Examples 2, and 5 to 8. The coating structures according to Examples 1, and 5 to 14 and the metal-based substrates according to Comparative Examples 2, and 5 to 8 were each immersed in 15 mL of 35 mass% hydrochloric acid, heated using a hot stirrer so that the temperature of the hydrochloric acid was 60°C, covered with a perforated plate or the like, and heated for 1 hour. Thereafter, the coating structures according to Examples 1, and 5 to 14 and the metal-based substrates according to Comparative Examples 2, and 5 to 8 immersed in the hydrochloric acid were taken out every hour and washed with pure water, then the pure water used for washing was wiped off, and the weight after each corrosion resistance test 1 (hereinafter, referred to as the weight after test 1.) was measured. Then, an action of immersing the coating structures according to Examples 1, and 5 to 14 and the metal-based substrates according to Comparative Examples 2, and 5 to 8 whose weights were measured in the new hydrochloric acid, heating for 1 hour, and measuring the weights was repeated up to 11 times.

### <Corrosion resistance test 2>

The weight before the corrosion resistance test 2 (hereinafter, referred to as the weight before test 2.) was measured for each of the coating structures according to Examples 15 to 28 and the metal-based substrates according to Comparative Examples 9 to 11. Lidded petri dishes in which the coating structures according to Examples 15 to 28 and the metal-based substrates according to Comparative Examples 9 to 11 were each immersed in 15 mL of 35 mass% hydrochloric acid were placed in a glass airtight container containing a certain amount of water, and heated for 1 hour using water in the glass airtight container as a heating medium using a hot stirrer while flowing a trace amount of nitrogen into the glass airtight container to exhaust the air so that the temperature of the hydrochloric acid was 60°C. Thereafter, the coating structures according to Examples 15 to 28 and the metal-based substrates according to Comparative Examples 9 to 11 immersed in the hydrochloric acid were taken out every hour and washed with pure water, then the pure water used for washing was wiped off, and the weight after each corrosion resistance test 2 (hereinafter, referred to as the weight after test 2.) was measured. Then, an action of immersing the coating structures according to Examples 15 to 28 and the metal-based substrates according to Comparative Examples 9 to 11 whose weights were measured in the new hydrochloric acid, heating for 1 hour, and measuring the weights was repeated up to 24 times. In the corrosion resistance test 2, the lidded petri dishes in which the coating structures according to Examples 15 to 28 and the metal-based substrates according to Comparative Examples 9 to 11 are each immersed in 15 mL of 35 mass% hydrochloric acid can be entirely and uniformly heated by heating the lidded petri dishes using water in the glass airtight container as the heating medium.

### <Corrosion resistance test 3>

The weight before the corrosion resistance test 3 (hereinafter, referred to as the weight before test 3.) was measured for each of the coating structure according to Example 29 and the metal-based substrate according to Comparative Example 12. In the corrosion resistance test 3, corrosion resistance to 50 mass% sulfuric acid, 35 mass% sodium hydroxide, and 25 mass% ammonia water was measured in addition to 35 mass% hydrochloric acid.

First, the corrosion resistance test 3 using 35 mass% hydrochloric acid is the same as the corrosion resistance test 1, and thus a detailed description thereof will be omitted.

Next, in the corrosion resistance test 3 using 50 mass% sulfuric acid, the coating structure according to Example 29 and the metal-based substrate according to Comparative Example 12 were each put in a 100 mL beaker, and about 30 g of 50 mass% sulfuric acid was added thereto. After being immersed in the sulfuric acid at 25°C for 5 hours, the coating structure according to Example 29 and the metal-based substrate according to Comparative Example 12 were taken out and washed with pure water, then the pure water used for washing was wiped off, and the weight after each corrosion resistance test 3 (hereinafter, referred to as the weight after test 3.) was measured.

Further, in the corrosion resistance test 3 using 35 mass% sodium hydroxide or 25 mass% ammonia water (hereinafter, referred to as the basic solution.), the coating structures according to Example 29 were each put in a 100 mL beaker, and about 30 g of the basic solution was added thereto. After being immersed in the basic solution at 25°C for 72 hours, the coating structures according to Example 29 were taken out and washed with pure water, then the pure water used for washing was wiped off, and the weight after each corrosion resistance test 3 (hereinafter, referred to as the weight after test 3.) was measured.

### <Heat resistance test>

For the coating structures according to Examples 2 to 4 and the tubular metal-based substrates according to Comparative Examples 3 and 4, the following heat resistance test was performed to evaluate the heat resistance. The samples for heat resistance test are as follows. The substrate of the coating structure according to Example 2 was the SUS protective tube (tube diameter × length dimension × thickness dimension: φ25 mm × 300 mm × 1 mm) for a thermocouple temperature sensor [K type] in a molten metal furnace. In addition, the substrates of the coating structures according to Examples 3 and 4 were the SUS protective tube (SUS316) (tube diameter × length dimension × thickness dimension: φ21.7 mm × 300 mm × 2.8 mm) for a thermocouple temperature sensor [K type] in a molten metal furnace. Then, tantalum-carbon composite coatings formed on these substrates were used as samples for heat resistance test (SUS). On the other hand, the tubular metal-based substrate according to Comparative Example 3 was the SUS protective tube according to Example 2 in which the tantalum-carbon composite coating or the like was not formed, and the tubular metal-based substrate according to Comparative Example 4 was the SUS protective tubes according to Examples 3 and 4 in which the tantalum-carbon composite coating or the like was not formed.

In this way, the weights before the heat resistance test (hereinafter, referred to as the weights before test.) of the obtained samples for heat resistance test were measured. Next, the samples for heat resistance test were immersed in a molten metal maintained at 1200°C, and the first time when the sensor display temperature showed an abnormal temperature exceeding ±200°C continuously for 5 minutes (1 plot/mm, 5 points) was defined as the durability time.

### <Raman spectroscopy>

For the coating structures according to Examples 1 and 8, the carbon-based substrate according to Comparative Example 1, and the tantalum carbide powder according to Reference Example 1, peaks located at 1300 cm⁻¹ to 1400 cm⁻¹ and 1550 cm⁻¹ to 1650 cm⁻¹ were observed in the Raman spectrum measured according to the Raman spectroscopy measurement conditions described above. Here, the single peak observed at 1550 cm⁻¹ to 1650 cm⁻¹ is called "G band" and is derived from a graphite structure (sp² structure) having high crystallinity. On the other hand, the peak observed at 1300 cm⁻¹ to 1400 cm⁻¹ is called "D band" and is derived from the diamond structure (sp³ structure). Then, the D band/G band peak area ratio calculated according to the Raman spectroscopy analysis conditions described above is an index indicating the existence ratio of the sp² structure and the sp³ structure in the carbon material. The larger the D band/G band peak area ratio, the higher the existence ratio of the sp³ structure in the carbon material. In addition, the standard deviation of the D band/G band peak area ratio is an index of the uniformity of the coating composition. The smaller the standard deviation of the D band/G band peak area ratio, the more uniform the coating composition can be formed.

**[Table 1]**

| | Substrate | | Metal compound-containing substance | | Carburizing treatment step | | |
|---|---|---|---|---|---|---|---|
| | Substrate type | Shape | Metal element type | Solution type | Carburizing temperature | Carburizing treatment time | Number of carburization |
| Example 1 | SUS304 | Plate | Ta | Tantalate compound-containing liquid | 1020°C | 110min | 1 |
| Example 2 | SUS304 | Tubular | Ta | Tantalate compound-containing liquid | 1020°C | 110min | 1 |
| Example 3 | SUS316 | Tubular | Ta | Tantalate compound-containing liquid | 1020°C | 110min | 1 |
| Example 4 | SUS316 | Tubular | Ta | Tantalate compound-containing liquid | 1020°C | 110min | 2 |
| Example 5 | SUS304 | Plate | Ta | Tantalate compound-containing liquid | 1070°C | 110min | 1 |
| Example 6 | SUS310S | Plate | Ta | Tantalate compound-containing liquid | 1070°C | 110min | 1 |
| Example 7 | Inconel | Plate | Ta | Tantalate compound-containing liquid | 1070°C | 110min | 1 |
| Example 8 | Ti | Plate | Ta | Tantalate compound-containing liquid | 1070°C | 110min | 1 |
| Example 9 | SUS304 | Plate | Nb | Niobate compound-containing liquid | 1070°C | 57min | 1 |
| Example 10 | SUS304 | Plate | Ti | Titanate compound-containing liquid | 1070°C | 57min | 1 |
| Example 11 | SUS304 | Plate | Zr | Zirconate compound-containing liquid | 1070°C | 57min | 1 |
| Example 12 | SUS304 | Plate | Hf | Hafnate compound-containing liquid | 1070°C | 57min | 1 |
| Example 13 | SUS304 | Plate | W | Tangstate compound-containing liquid | 1070°C | 57min | 1 |
| Example 14 | SUS304 | Plate | Mo | Molybdate compound-containing liquid | 1070°C | 57min | 1 |
| Comparative Example 1 | Carbon | Plate | - | - | - | - | - |
| Comparative Example 2 | SUS304 | Plate | - | - | - | - | - |
| Comparative Example 3 | SUS304 | Tubular | - | - | - | - | - |
| Comparative Example 4 | SUS316 | Tubular | - | - | - | - | - |
| Comparative Example 5 | SUS304 | Plate | - | - | - | - | - |
| Comparative Example 6 | SUS310S | Plate | - | - | - | - | - |
| Comparative Example 7 | Inconel | Plate | - | - | - | - | - |
| Comparative Example 8 | Ti | Plate | - | - | - | - | - |
| Reference Example 1 | Tantalum carbide | Powder | - | - | - | - | - |

**[Table 2]**

| | Substrate | | Metal compound-containing substance | | Carburizing treatment step | | |
|---|---|---|---|---|---|---|---|
| | Substrate type | Shape | Metal element type | Solution type | Carburizing temperature | Carburizing treatment time | Number of carburization |
| Example 15 | SUS310S | Plate | Ta | Tantalate compound-containing liquid | 1070°C | 110min | 1 |
| Example 16 | SUS310S | Plate | Nb | Niobate compound-containing liquid | 1070°C | 110min | 1 |
| Example 17 | SUS310S | Plate | Ti | Titanate compound-containing liquid | 1070°C | 110min | 1 |
| Example 18 | SUS310S | Plate | Zr | Zirconate compound-containing liquid | 1070°C | 110min | 1 |
| Example 19 | SUS310S | Plate | Hf | Hafnate compound-containing liquid | 1070°C | 110min | 1 |
| Example 20 | SUS310S | Plate | W | Tangstate compound-containing liquid | 1070°C | 110min | 1 |
| Example 21 | SUS310S | Plate | Mo | Molybdate compound-containing liquid | 1070°C | 110min | 1 |
| Example 22 | SUS310S | Plate | Si | Silicate compound-containing liquid | 1070°C | 110min | 1 |
| Example 23 | SUS304 | Plate | Ta | Tantalate compound-containing liquid | 1070°C | 110min | 1 |
| Example 24 | SUS304 | Plate | Ta+Ti | Tantalate compound-containing liquid + Titanate compound-containing liquid | 1070°C | 110min | 1 |
| Example 25 | SUS304 | Plate | Ta+W | Tantalate compound-containing liquid + Tangstate compound-containing liquid | 1070°C | 110min | 1 |
| Example 26 | SUS304 | Plate | Ta | Tantalate compound-containing liquid | 1070°C | 110min | 2 |
| Example 27 | SUS310S | Plate | Ta | Tantalate compound-containing liquid | 1070°C | 110min | 2 |
| Example 28 | Inconel | Plate | Ta | Tantalate compound-containing liquid | 1070°C | 110min | 2 |
| Comparative Example 9 | SUS310S | Plate | - | - | - | - | - |
| Comparative Example 10 | SUS304 | Plate | - | - | - | - | - |
| Comparative Example 11 | Inconel | Plate | - | - | - | - | - |

**[Table 3]**

| | Substrate | | Metal compound-containing substance | | Carburizing treatment step | | |
|---|---|---|---|---|---|---|---|
| | Substrate type | Shape | Metal element type | Solution type | Carburizing temperature | Carburizing treatment time | Number of carburization |
| Example 29 | SUS304 | Plate | Ta | Tantalate compound-containing liquid | 1070°C | 110min | 1 |
| Comparative Example 12 | SUS304 | Plate | - | - | - | - | - |

**[Table 4]**

| | Corrosion resistance test 1 | | Heat resistance test | | Raman analysis | | |
|---|---|---|---|---|---|---|---|
| | | | | | Peak intensity retio D band/ G band | Peak area ratio D band/ G band | Standard deviation of peak area ratio D band/ G band |
| | Immersion time | Residual weight ratio | Heating temperature | Durability time | | | |
| Example 1 | 3h | 80% | - | - | 0.62 | 1.19 | 0.26 |
| Example 2 | - | - | 1200°C | 154min | - | - | - |
| Example 3 | - | - | 1200°C | 1729min | - | - | - |
| Example 4 | - | - | 1200°C | 2650min | - | - | - |
| Example 5 | 2h | 65% | - | - | - | - | - |
| Example 6 | 2h | 81% | - | - | - | - | - |
| Example 7 | 7h | 78% | - | - | - | - | - |
| Example 8 | 7h | 100% | - | - | 1.08 | 1.7 | 0.28 |
| Example 9 | 2h | 54% | - | - | - | - | - |
| Example 10 | 2h | 39% | - | - | - | - | - |
| Example 11 | 2h | 47% | - | - | - | - | - |
| Example 12 | 2h | 51% | - | - | - | - | - |
| Example 13 | 2h | 72% | - | - | - | - | - |
| Example 14 | 2h | 70% | - | - | - | - | - |
| Comparative Example 1 | - | - | - | - | 0.26 | 0.45 | - |
| Comparative Example 2 | 3h | 37% | - | - | - | - | - |
| Comparative Example 3 | - | - | 1200°C | 102min | - | - | - |
| Comparative Example 4 | - | - | 1200°C | 232min | - | - | - |
| Comparative Example 5 | 2h | 22% | - | - | - | - | - |
| Comparative Example 6 | 2h | 16% | - | - | - | - | - |
| Comparative Example 7 | 7h | 40% | - | - | - | - | - |
| Comparative Example 8 | 7h | 67% | - | - | - | - | - |
| Reference Example 1 | - | | - | - | 0.64 | 3.68 | - |

**[Table 5]**

| | Corrosion resistance test 2 | |
|---|---|---|
| | Immersion time | Residual weight ratio |
| Example 15 | 4h | 85% |
| Example 16 | 4h | 89% |
| Example 17 | 4h | 80% |
| Example 18 | 4h | 89% |
| Example 19 | 4h | 90% |
| Example 20 | 4h | 73% |
| Example 21 | 4h | 79% |
| Example 22 | 4h | 92% |
| Example 23 | 4h | 63% |
| Example 24 | 4h | 63% |
| Example 25 | 4h | 63% |
| Example 26 | 4h | 71% |
| Example 27 | 4h | 92% |
| Example 28 | 7h | 97% |
| Comparative Example 9 | 4h | 16% |
| Comparative Example 10 | 4h | 6% |
| Comparative Example 11 | 7h | 40% |

**[Table 6]**

| | Corrosion resistance test 3 | | | |
|---|---|---|---|---|
| | Liduid type | Temperature | Immersion time | Residual weight ratio |
| Example 29 | 35 mass% Hydrochloric acid | 60°C | 4h | 66% |
| Example 29 | 50 mass% Sulfuric acid | 25°C | 5h | 99% |
| Example 29 | 35 mass% Sodium hydroxide | 25°C | 72h | 100% |
| Example 29 | 25 mass% Ammonia water | 25°C | 72h | 100% |
| Comparative Example 12 | 35 mass% Hydrochloric acid | 60°C | 4h | 16% |
| Comparative Example 12 | 50 mass% Sulfuric acid | 25°C | 5h | 89% |

In the coating structures according to Examples 1 to 29, a uniform metal composite coating could be formed on a substrate by performing at least one reaction of a carbonization reaction, a carbonitriding reaction, or a nitriding reaction by applying or immersing a metal compound-containing substance on the substrate, and heating the substrate in a state where a carbon source and/or a nitrogen source was supplied under reduced pressure or vacuum.

As shown in Fig. 1, the coating structure according to Example 1 had no corrosion, had little weight loss, and had corrosion resistance even when boiled in 35 mass% hydrochloric acid. On the other hand, the metal-based substrate according to Comparative Example 2 was corroded and had large weight loss by 35 mass% hydrochloric acid.

As shown in Figs. 2 to 5, the coating structures according to Examples 5 to 8 could maintain the residual weight ratio and had corrosion resistance regardless of the type of the substrate. In particular, the coating structures according to Examples 7 and 8 maintained a high residual weight ratio and had remarkable corrosion resistance. On the other hand, in the metal-based substrates according to Comparative Examples 5 to 8, a decrease in residual weight ratio was observed.

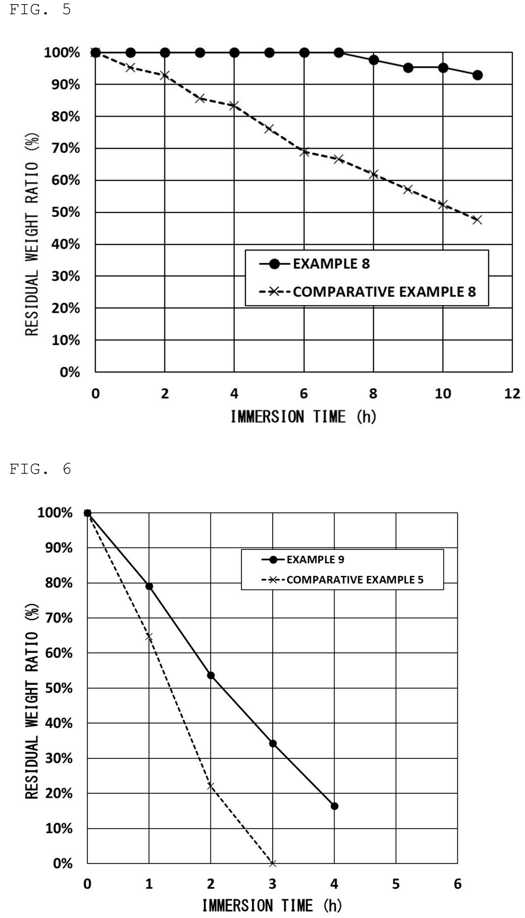

As shown in Figs. 6 to 11, the coating structures according to Examples 9 to 14 could maintain the residual weight ratio and had corrosion resistance regardless of the type of the metal compound contained in the metal composite coating formed on the substrate.

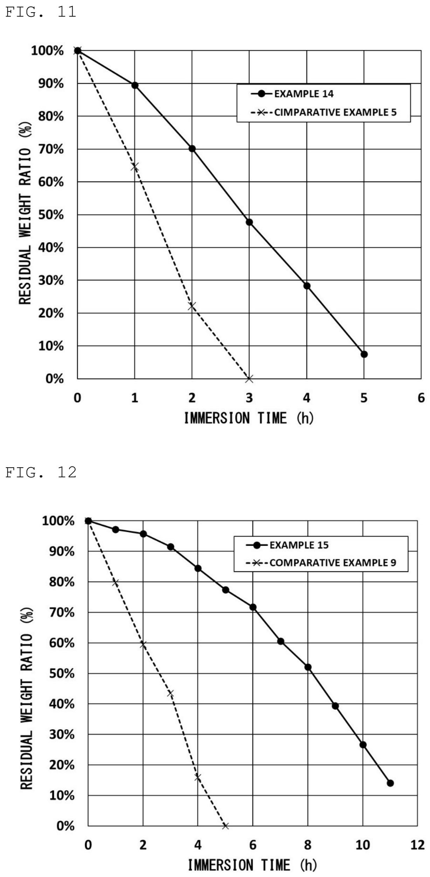

As shown in Figs. 12 to 25, the coating structures according to Examples 15 to 28 could maintain the residual weight ratio and had corrosion resistance even when the method of heating 35 mass% hydrochloric acid was changed.

The coating structure according to Example 29 could maintain the residual weight ratio and had corrosion resistance even with 50 mass% sulfuric acid, 35 mass% sodium hydroxide as a basic solution, or 25 mass% ammonia water in addition to 35 mass% hydrochloric acid

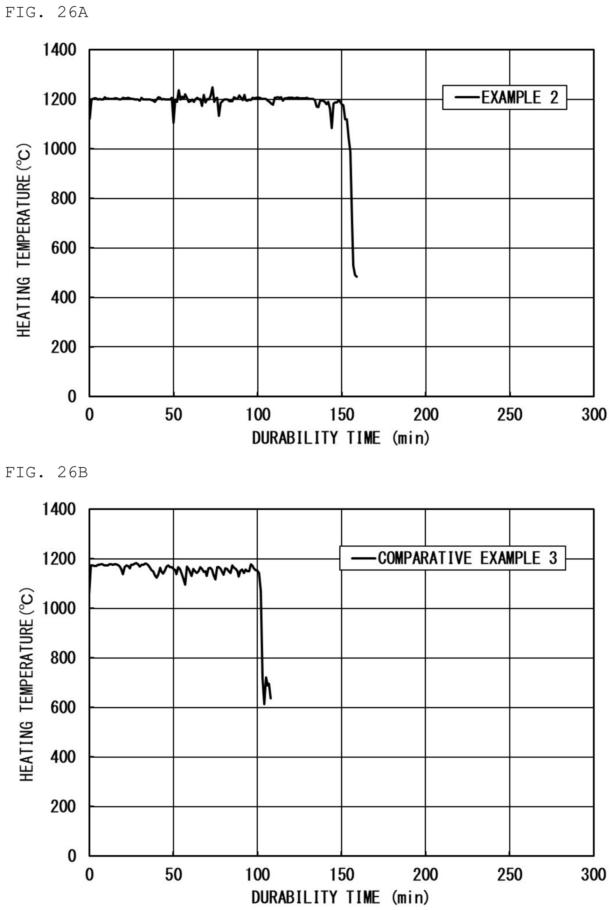

As shown in Fig. 26(a), in the coating structure according to Example 2, the durability time in the heat resistance test was 154 minutes, and therefore the heat resistance of the substrate could be improved by the metal composite coating formed on the substrate. On the other hand, as shown in Fig. 26(b), in the tubular metal-based substrate according to Comparative Example 3, the durability time in the heat resistance test was 102 minutes.

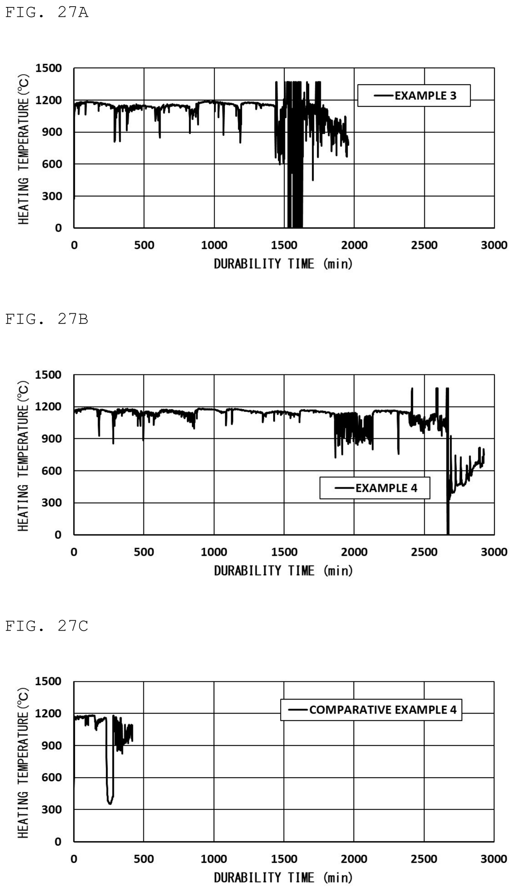

As shown in Fig. 27(a), in the coating structure according to Example 3, the durability time in the heat resistance test was 1729 minutes, and therefore the heat resistance of the substrate could be dramatically improved by the metal composite coating formed on the substrate. In addition, as shown in Fig. 27(b), in the coating structure according to Example 4, the durability time in the heat resistance test was 2650 minutes, and therefore the heat resistance of the substrate could be dramatically improved by the metal composite coating formed on the substrate. On the other hand, as shown in Fig. 27(c), in the tubular metal-based substrate according to Comparative Example 4, the durability time in the heat resistance test was 232 minutes.

Furthermore, the durability time in the heat resistance test of the coating structure according to Example 2 shown in Fig. 26(a) is shorter than the durability time in the heat resistance test of the tubular metal-based substrate according to Comparative Example 4 shown in Fig. 27(c), but this is due to the difference in the material of the substrate used in Example 2 and Comparative Example 4.

In the coating structures according to Examples 1 and 8, since the metal-carbon composite coating formed on the substrate had a D band/G band peak area ratio in Raman spectroscopy of 0.5 or more and 2.0 or less, a physically and chemically stable surface layer could be formed, and a coating having a uniform composition could be formed, and therefore the corrosion resistance of the substrate was excellent. Furthermore, in the coating structures according to Examples 1, and 6 to 9, since the metal-carbon composite coating formed on the substrate had a standard deviation of the D band/G band peak area ratio in Raman spectroscopy of 0.1 or more and 0.35 or less, a physically and chemically stable surface layer could be formed, and a coating having a uniform composition could be formed, and therefore the corrosion resistance of the substrate was excellent.

The invention disclosed in the present description includes, in addition to the configurations of the respective inventions and the embodiments, those specified by changing these partial configurations to other configurations disclosed in the present description, those specified by adding other configurations disclosed in the present description to these configurations, or those specified by deleting these partial configurations to an extent that a partial action and effect can be obtained and forming a superordinate concept.

### Industrial Applicability

The method for producing a coating structure according to the present invention is suitable as a method for producing a coating structure because a uniform metal composite coating film can be formed on a substrate, which can form a physically and chemically stable surface layer independent of the substrate. Specifically, in the method for producing a coating structure according to the present invention, a metal composite coating can be formed at a low temperature by performing at least one reaction of a carbonization reaction, a carbonitriding reaction, or a nitriding reaction by heating the substrate in a state where a carbon source and/or a nitrogen source is supplied under reduced pressure or vacuum, so that the energy cost can be reduced. Further, the method for producing a coating structure according to the present invention improves the heat resistance and the reaction resistance and extends the life of the substrate, whereby the waste can be reduced, and the energy cost in the disposal of the waste can also be reduced. Furthermore, the coating structure according to the present invention is suitable as a coating structure because a metal composite coating can be formed at a low temperature by performing at least one reaction of a carbonization reaction, a carbonitriding reaction, or a nitriding reaction by heating the substrate in a state where a carbon source and/or a nitrogen source is supplied under reduced pressure or vacuum. Specifically, since the coating structure according to the present invention has a uniform metal composite coating on the substrate, the heat resistance and the reaction resistance are improved, and the life of the substrate is extended, whereby the waste can be reduced, and the energy cost in the disposal of the waste can also be reduced. These points lead to achieving sustainable management and efficient advantages of natural resources, and decarbonization (carbon neutral).

## Claims

1. A method for producing a coating structure having a metal composite coating on a substrate, the method comprising:
a step of applying or immersing a metal compound-containing substance on the substrate; and
a reaction step of forming a metal composite coating by performing at least one reaction of a carbonization reaction, a carbonitriding reaction, or a nitriding reaction by heating the substrate in a state where a carbon source and/or a nitrogen source is supplied under reduced pressure or vacuum.

2. The method for producing a coating structure according to claim 1, comprising a drying step of drying the substrate coated or immersed with the metal compound-containing substance.

3. The method for producing a coating structure according to claim 1, wherein a step of applying or immersing the metal compound-containing substance on the substrate and the reaction step are repeated a plurality of times.

4. The method for producing a coating structure according to any one of claims 1 to 3, wherein the substrate contains at least one selected from the group consisting of carbon, a metal carbide, a pure metal, an alloy, a metal oxide, and a composite metal oxide.

5. The method for producing a coating structure according to any one of claims 1 to 3, wherein the metal composite coating contains a compound of at least one metal element selected from Ti, Nb, Mo, Hf, Ta, W, Zr, and Si.

6. The method for producing a coating structure according to any one of claims 1 to 3, wherein the metal composite coating contains a compound of at least one metal element selected from Nb, Hf, and Ta.

7. The method for producing a coating structure according to any one of claims 1 to 3, wherein the metal composite coating contains at least one metal carbide selected from Ti carbide, Nb carbide, Mo carbide, Hf carbide, Ta carbide, W carbide, Zr carbide, and Si carbide.

8. The method for producing a coating structure according to any one of claims 1 to 3, wherein the metal compound-containing substance has a maximum value of light transmittance in a wavelength region of 500 nm to 700 nm of 70%T or more and a particle size (D50) of particles in the metal compound-containing substance in dynamic light scattering of 3,000 nm or less.

9. The method for producing a coating structure according to any one of claims 1 to 3, wherein the reaction step is a carbonization reaction, and the carbon source is one containing an unsaturated hydrocarbon and an inert component or a saturated hydrocarbon.

10. The method for producing a coating structure according to any one of claims 1 to 3, wherein the reaction step is a carbonitriding reaction or a nitriding reaction, and the nitrogen source contains ammonia and an inert component.

11. The method for producing a coating structure according to any one of claims 1 to 3, wherein in the reaction step, a heating temperature is 500°C or higher and 1150°C or lower.

12. The method for producing a coating structure according to claim 11, wherein in the reaction step, a heating time is 0.05 hours or more and 10 hours or less.

13. A coating structure having a metal composite coating on a substrate, wherein
the metal composite coating is formed by performing at least one reaction of a carbonization reaction, a carbonitriding reaction, or a nitriding reaction by heating a substrate coated or immersed with a metal compound-containing substance in a state where a carbon source and/or a nitrogen source is supplied under reduced pressure or vacuum.

14. A coating structure having a metal-carbon composite coating on a substrate, wherein
the metal-carbon composite coating has a D band/G band peak area ratio in Raman spectroscopy of 0.5 or more and 2.0 or less.

15. A coating structure having a metal-carbon composite coating on a substrate, wherein
the metal-carbon composite coating has a D band/G band peak area ratio in Raman spectroscopy of 0.5 or more and 2.0 or less and a standard deviation of the D band/G band peak area ratio of 0.1 or more and 0.35 or less.
